(19) Europäisches Patentamt
European Patent Office
Office européen des brevets

(11) Veröffentlichungsnummer: **0 240 716**
**A2**

# (12) EUROPÄISCHE PATENTANMELDUNG

(21) Anmeldenummer: **87103029.2**

(22) Anmeldetag: **04.03.87**

(51) Int.Cl.³: **C 07 F 9/65**
A 01 N 57/36

(30) Priorität: **13.03.86 DE 3608353**

(43) Veröffentlichungstag der Anmeldung:
**14.10.87 Patentblatt 87/42**

(84) Benannte Vertragsstaaten:
**AT BE CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Müller, Nikolaus, Dr.**
**Knipprather Strasse 98**
**D-4019 Monheim(DE)**

(72) Erfinder: **Bonse, Gerhard, Dr.**
**Wolfskaul 3**
**D-5000 Köln 80(DE)**

(72) Erfinder: **Andrews, Peter, Dr.**
**Gellertweg 2**
**D-5600 Wuppertal 1(DE)**

(72) Erfinder: **Stendel, Wilhelm, Dr.**
**In den Birken 55**
**D-5600 Wuppertal(DE)**

(72) Erfinder: **Steffens, Robert, Dr.**
**Roggendorfstrasse 63**
**D-5000 Köln 80(DE)**

(54) **Bicyclische Diazaphosphorverbindungen, Verfahren zu ihrer Herstellung und ihre Verwendung als Schädlingsbekämpfungsmittel.**

(57) 1. Es wurden die neuen bicyclischen Diazaphosphorverbindungen der Formel I

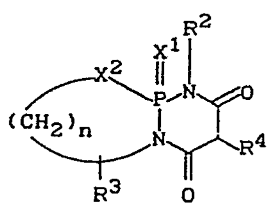

I

in welcher

n für 2, 3, 4, 5 oder

$X^1$ für O oder S steht,

$X^2$ für O, S oder $N-R^1$

$R^1$ und $R^2$ unabhängig voneinander für Wasserstoff, Alkyl, Aryl oder Aralkyl stehen,

$R^3$ für Wasserstoff oder einen oder mehrere gleiche oder verschiedene Substituenten steht,

$R^1$ für Acylreste steht,

gefunden.

Die Verbindungen der Formel I lassen sich hervorragend als Schädlingsbekämpfungsmittel, insbesondere als Insektizide, Fungizide und Akarizide auf den Gebieten Land- und Forstwirtschaft, Haushalt, Hygiene, Vorrats- und Materialschutz sowie als Ekto- und Endoparasitizide auf dem Gebiet der Veterinärmedizin einsetzen.

EP 0 240 716 A2

Croydon Printing Company Ltd.

0240716

BAYER AKTIENGESELLSCHAFT
Konzernverwaltung RP
Patentabteilung

5090 Leverkusen, Bayerwerk

Rt/cm-c
Ib

Bicyclische Diazaphosphorverbindungen, Verfahren zu ihrer Herstellung und ihre Verwendung als Schädlingsbekämpfungsmittel

---

Die vorliegende Erfindung betrifft neue bicyclische Diazaphosphorverbindungen, Verfahren zu ihrer Herstellung, ihre Verwendung als Schädlingsbekämpfungsmittel in Land- und Forstwirtschaft sowie in den Gebieten Haushalt, Hygiene, Vorrats- und Materialschutz und Veterinärmedizin.

Phenylcarbamoylsubstituierte Diazaphosphorine sind bereits bekannt geworden. Sie eignen sich als Schädlingsbekämpfungsmittel sowie als Ektoparasitizide (CH-PS 643 563). Ihre Wirkung, vor allem bei niedrigen Aufwandkonzentrationen, ist jedoch nicht immer voll befriedigend.

1. Es wurden die neuen bicyclischen Diazaphosphorverbindungen der Formel I gefunden

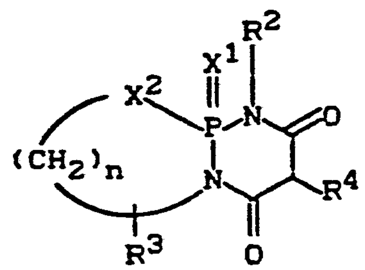

I

in welcher

n für 2, 3, 4, 5 steht

$X^1$ für O oder S steht

$X^2$ für O, S oder >N-$R^1$ steht,

$R^1$ und $R^2$ unabhängig voneinander für Wasserstoff, Alkyl, Aryl oder Aralkyl stehen,

$R^3$ für Wasserstoff oder einen oder mehrere gleiche oder verschiedene Substituenten steht,

$R^4$ für Acylreste steht.

Die Verbindungen der Formel I können in Form ihrer verschiedenen Tautomeren (Keto/Enol) sowie als Gemische dieser Tautomeren, sowie in Form ihrer Salze mit Basen vorliegen. Formel I umfaßt auch alle möglichen Enantiomeren und Diastereomeren sowie deren Gemische.

2. Es wurde gefunden, daß man die Verbindungen der Formel I

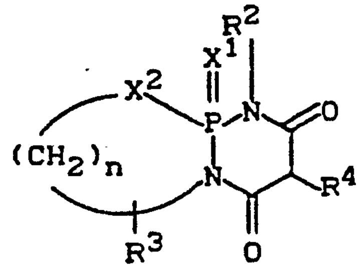

in welcher

n für 2, 3, 4, 5 steht

$X^1$ für O oder S steht

$X^2$ für O, S oder $\rangle N-R^1$ steht,

$R^1$ und $R^2$ unabhängig voneinander für Wasserstoff, Alkyl, Aryl oder Aralkyl stehen,

$R^3$ für Wasserstoff oder einen oder mehrere gleiche oder verschiedene Substituenten steht,

$R^4$ für Acylreste steht,

erhält, indem man

bicyclische Diazaphosphorverbindungen der Formel II

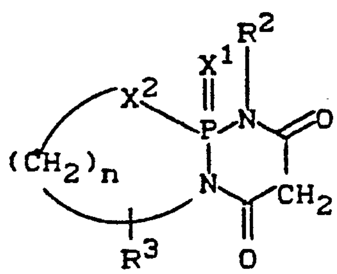

II

in welcher

n, $X^1$, $X^2$, $R^2$, $R^3$ die oben angegebene Bedeutung haben,

a) mit Isocyanaten der Formel III

$$R^5 - NCO(S) \qquad III$$

in welcher

$R^5$ für gegebenenfalls substituiertes Alkyl, Aryl oder Acyl steht,

gegebenenfalls in Gegenwart von Katalysatoren umsetzt, oder

b) mit Verbindungen der Formel IV

$$R^6 - X^3 \qquad IV$$

in welcher

$X^3$ für die Reste -CO(S)Hal, -CO-O-CO-$R^6$,

$R^6$ für gegebenenfalls substituiertes Alkyl, Aryl oder die Reste -O-$R^7$, -$NR^8R^9$ steht,

$R^7$ für Alkyl oder Aryl steht,

$R^8$ für Wasserstoff, gegebenenfalls substituiertes Alkyl, Aryl oder Acyl steht,

$R^9$ für Wasserstoff, gegebenenfalls substituiertes Alkyl oder Aryl steht,

$R^8$ und $R^9$ gemeinsam mit dem angrenzenden Stickstoffatom für einen gegebenenfalls weitere Heteroatome enthaltenden gesättigten Heterocyclus stehen, der gegebenenfalls substituiert sein kann

in Gegenwart von Säurebindemitteln umsetzt, oder

c) Verbindungen der Formeln V oder Va

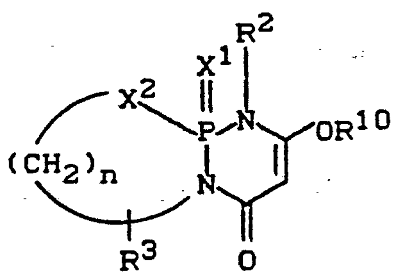

V

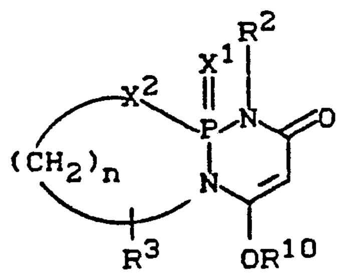

Va

in welchen

n, $X^1$, $X^2$, $R^2$, $R^3$ die oben angegebenen Bedeutungen, haben

$R^{10}$ für den Rest $-CO(S)R^6$ steht, wobei

$R^6$ die oben angegebene Bedeutung hat,

in Gegenwart von starken Basen umlagert oder

d) Verbindungen der Formel VI

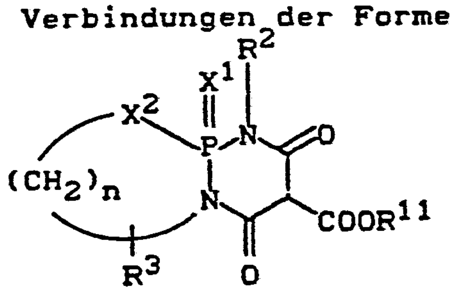

VI

in welcher

n, $X^1$, $R^1$, $R^2$ und $R^3$ die oben angegebene Bedeutung besitzen und

$R^{11}$ für $C_{1-4}$-Alkyl, Phenyl, das gegebenenfalls durch $NO_2$ substituiert ist, steht

mit Aminen der Formel VII

$HNR^8R^9$ VII

in welcher

$R^8$ und $R^9$ die oben angegebene Bedeutung besitzen,

umsetzt.

3. Die Verbindungen der Formel II

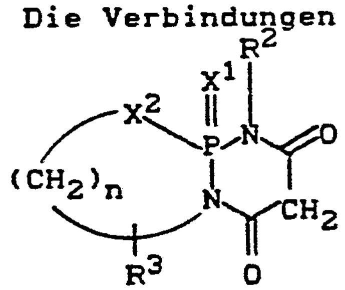

II

in welcher

n, $X^1$, $X^2$, $R^2$, $R^3$ die oben angegebene Bedeutung, besitzen

sind neu.

4. Die Verbindungen der Formel II

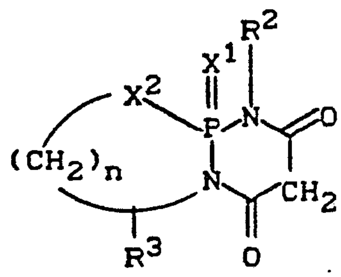

II

in welcher

n, $X^1$, $X^2$, $R^2$, $R^3$ die oben angegebene Bedeutung besitzen,

werden erhalten, indem man Verbindungen der Formel VIII

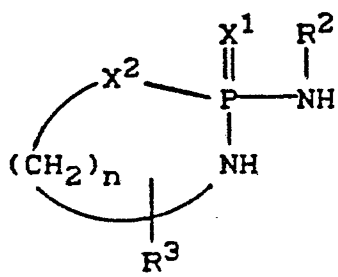

VIII

in welcher

n, $X^1$, $X^2$, $R^1$, $R^2$, $R^3$ die obenangegebene Bedeutung besitzt

mit Verbindungen der Formel IX

$$CH_2(COR^{12})_2 \qquad IX$$

in welcher

$R^{12}$ für Halogen, OH, $C_{1-4}$-Alkoxy, Phenoxy steht

umsetzt.

5. Die Verbindungen der Formeln V bzw. Va

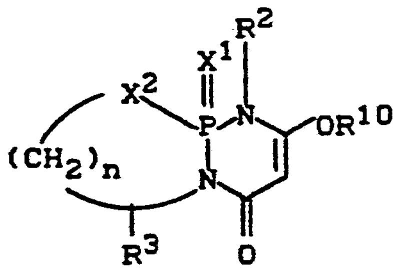

V

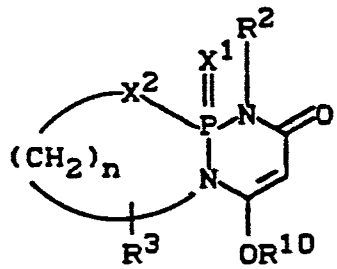

Va

in welcher

n, $X^1$, $X^2$, $R^1$, $R^2$, $R^3$, $R^{10}$ die oben angegebene Bedeutung besitzen,

sind neu.

6. Die Verbindungen der Formeln V bzw. Va

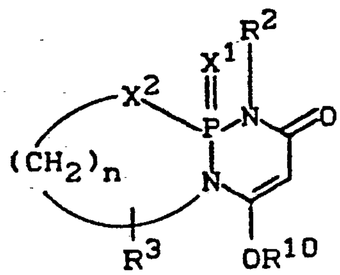

Va

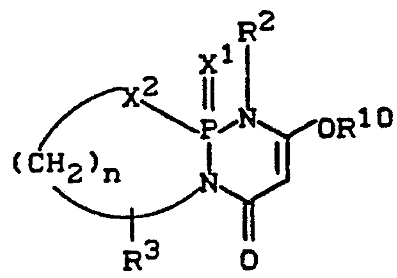

V

in welcher

n, $X^1$, $X^2$, $R^2$, $R^3$, $R^{10}$ die oben angegebene Bedeutung haben,

werden erhalten, indem man Verbindungen der Formel II

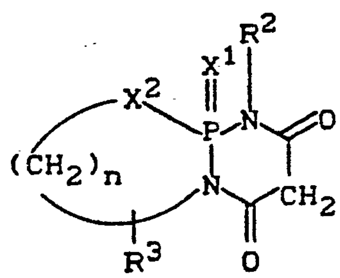

II

in welcher

n, $X^1$, $X^2$, $R^2$, $R^3$ die oben angegebene Bedeutung besitzen

mit Verbindungen der Formel IV

$$R^6\text{-}X^3 \qquad \text{IV}$$

in welcher

$R^6$ und $X^3$ die oben (Punkt 2b) angegebene Bedeutung besitzen,

umsetzt.

Die Verbindungen der Formel I lassen sich hervorragend als Schädlingsbekämpfungsmittel, insbesondere als Insektizide, Fungizide und Akarizide auf den Gebieten Land- und Forstwirtschaft, Haushalt, Hygiene, Vorrats- und Materialschutz sowie als Ekto- und Endoparasitizide auf dem Gebiet der Veterinärmedizin einsetzen.

Bevorzugt sind Verbindungen der Formel I, in welcher

n für 3 oder 4 insbesondere für 3 steht,

$X^1$ für O, S, steht, insbesondere für O steht,

$X^2$ für O oder $>N-R^1$ insbesondere für O, steht,

$R^1$ für $C_{1-20}$-Alkyl, $C_{3-20}$-Alkenyl, $C_{3-20}$-Alkinyl, $C_{3-10}$-Cycloalkyl, Phenyl, Naphthyl, Heteroaryl mit bis zu 7 Ringatomen und N, O, S als Heteroatomen steht, die gegebenenfalls durch einen oder mehrere der folgenden Reste substituiert sein können:

Alkyl mit vorzugsweise 1 bis 4, insbesondere 1 oder 2 Kohlenstoffatomen, wie Methyl, Ethyl, n.- und i.-Propyl und n.-, i.-, s.- und t.-Butyl; Alkoxy mit vorzugsweise 1 bis 4, insbesondere 1 oder 2 Kohlenstoffatomen, wie Methoxy, Ethoxy, n.- und i.-Propyloxy und n.-, i.-, s.- und t.-Butyloxy; Alkylthio mit vorzugsweise 1 bis 4, insbesondere 1 oder 2 Kohlenstoffatomen, wie Methylthio, Ethylthio, n.- und i.-Propylthio und n.-, i.-, s.- und t.-Butylthio; Halogenalkyl mit vorzugsweise 1 bis 4, insbesondere 1

oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl, Fluor-, Chlorethyl; Halogenalkoxy mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome vorzugsweise Fluor, Chlor, Brom, insbesondere Fluor stehen wie Trifluormethoxy; Halogenalkylthio mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome vorzugsweise Fluor, Chlor, Brom, insbesondere Fluor stehen, wie Trifluormethylthio; Alkylendioxy mit vorzugsweise 1 oder 2 Kohlenstoffatomen wie Methylendioxy oder Ethylendioxy; halogensubstituiertes Alkylendioxy mit vorzugsweise 1 oder 2 Kohlenstoffatomen und vorzugsweise 1 bis 4, insbesondere 2 bis 3 Halogenatomen, wobei die Halogenatome gleich oder verschieden sind und als Halogenatome vorzugsweise Fluor oder Chlor, insbesondere Fluor stehen wie Difluormethylendioxy, Trifluorethylendioxy, Tetrafluorethylendioxy; Hydroxy; Halogen, vorzugsweise Fluor, Chlor, Brom und Jod, insbesondere Chlor und Brom; Cyano; Nitro; Amino; Monoalkyl- und Dialkylamino mit vorzugsweise 1 bis 4, insbesondere 1 oder 2 Kohlenstoffatomen je Alkylgruppe, wie Methylamino,

Methyl- ethyl-amino, n.- und i.-Propylamino und Methyl-n.- Butylamino; Formyl; Carboxyl; Alkylcarbonyl mit vorzugsweise 2-4 Kohlenstoffatomen; Carbalkoxy mit vorzugsweise 2 bis 4, insbesondere 2 oder 3 Kohlenstoffatomen, wie Carbomethoxy und Carboethoxy; Sulfo ($-SO_3H$); Alkylsulfonyl mit vorzugsweise 1 bis 4, insbesondere 1 oder 2 Kohlenstoffatomen, wie Methylsulfonyl und Ethylsulfonyl; Arylsulfonyl mit vorzugsweise 6 oder 10 Arylkohlenstoffatomen, wie Phenylsulfonyl; Phenyl, Naphthyl, Phenoxy, Naphthoxy, Phenylthio, Naphthylthio, die ihrerseits wieder substituiert sein können,

$R^2$ für Wasserstoff, $C_1$-$C_4$-Alkyl, Phenyl, Benzyl, die gegebenenfalls substituiert sein können, steht,

$R^3$ für Wasserstoff, $C_1$-$C_4$-Alkyl, Phenyl, Benzyl, die gegegebenenfalls substituiert sein können, steht,

$R^4$ für den Rest $-CO(S)R^6$ steht,

$R^6$ für geradkettiges, verzweigtes oder cyclisches Alkyl mit bis zu 20 C-Atomen, das gegebenenfalls substituiert ist durch Halogen, insbesondere Chlor, Fluor, Brom, $C_{1-4}$-Alkoxy, insbesondere Methoxy, Ethoxy, steht, ferner für Phenyl steht, das gegebenenfalls substituiert ist durch Alkyl mit vorzugsweise 1 bis 4, insbesondere 1 oder 2 Kohlenstoffatomen, wie Methyl, Ethyl, n.- und i.-Propyl und n.-, i.-, s.- und t-Butyl, Alkoxy mit 1-4 C-Atomen, insbesondere

1 oder 2 Kohlenstoffatomen, wie Methoxy, Ethoxy, n.- und i.-Propyloxy und n.-, i.-, s.- und t.-Butyloxy; Alkylthio mit vorzugsweise 1 bis 4, insbesondere 1 oder 2 Kohlenstoffatomen, wie Methylthio, Ethylthio, n.- und i.-Propylthio und n.-, i.-, s.- und t.-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen,
wie Trifluormethyl, Fluor-Chlorethyl; Halogenalkoxy mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome vorzugsweise Fluor, Chlor, Brom, insbesondere Fluor stehen wie Trifluormethoxy; Halogenalkylthio mit vorzugsweise 1 bis 4, insbesondere 1 oder 2 Kohlenstoffatomen und vorzugsweise 1 bis 5,
insbesondere 1 bis 3 Halogenatomen, wobei die Halogenatome gleich oder verschieden sind und als Halogenatome vorzugsweise Fluor, Chlor, Brom, insbesondere Fluor stehen, wie Trifluormethylthio; Alkylendioxy mit vorzugsweise 1 oder 2 Kohlenstoffatomen wie Methylendioxy oder Ethylendioxy; halogensubstituiertes Alkylendioxy mit vorzugsweise 1 oder 2 Kohlenstoffatomen und vorzugsweise 1 bis 4, insbesondere 2 bis 3 Halogenatomen, wobei die Halogenatome gleich oder verschieden sind und als Halogenatome vorzugsweise Fluor oder Chlor, insbesondere Fluor stehen wie Difluormethylendioxy, Trifluorethylendioxy, Tetrafluorethylendioxy; Hydroxy; Halogen, vorzugsweise Fluor, Chlor, Brom und Jod, insbesondere Chlor und Brom; Cyano; Nitro; Amino; Monoalkyl- und Dialkylamino mit vorzugsweise 1 bis 4, insbesondere 1 oder 2 Kohlenstoffatomen je Alkylgruppe, wie Methylamino, Methyl- ethyl-amino, n.- und i.-Propylamino und Methyl-n.- Butylamino; Formyl; Carboxyl; Alkylcarbonyl mit vorzugsweise 2-4 Kohlenstoffatomen; Carbalkoxy mit vorzugsweise 2 bis 4, insbesondere 2 oder 3 Kohlenstoffatomen, wie Carbomethoxy und Carboethoxy; Sulfo ($-SO_3H$); Alkylsulfonyl mit vorzugsweise 1 bis 4, insbesondere 1 oder 2 Kohlenstoffatomen, wie Methylsulfonyl und Ethylsulfonyl; Arylsulfonyl mit vorzugsweise 6 oder 10 Arylkohlenstoffatomen, wie Phenylsulfonyl; Phenyl, Naphthyl, Phenoxy, Naphthoxy, Phenylthio, Naphthylthio, die ihrerseits wieder substituiert sein können,

$R^6$ steht weiter bevorzugt für die Reste $-O-R^7$ und $-NR^8R^9$,

wobei

$R^8$ bevorzugt für Wasserstoff, $C_{1-4}$-Alkyl steht,

$R^9$ bevorzugt für Wasserstoff, $C_{1-4}$-Alkyl, Phenyl steht, das gegebenenfalls substituiert ist durch Alkyl mit vorzugsweise 1 bis 4, insbesondere 1 oder 2 Kohlenstoffatomen, wie Methyl, Ethyl, n.- und i.-Propyl und n.-, i.-, s.- und t.-Butyl; Alkoxy mit vorzugsweise

1 bis 4, insbesondere 1 oder 2 Kohlenstoffatomen, wie Methoxy, Ethoxy, n.- und i.-Propyloxy und n.-, i.-, s.- und t.-Butyloxy; Alkylthio mit vorzugsweise 1 bis 4, insbesondere 1 oder 2 Kohlenstoffatomen, wie Methylthio, Ethylthio, n.- und i.-Propylthio und n.-, i.-, s.- und t.-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl, Fluor-, Chlorethyl; Halogenalkoxy mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome vorzugsweise Fluor, Chlor, Brom, insbesondere Fluor stehen wie Trifluormethoxy; Halogenalkylthio mit vorzugsweise 1 bis 4, insbesondere 1 oder 2 Kohlenstoffatomen und vorzugsweise 1 bis 5, insbesondere 1 bis 3 Halogenatomen,
wobei die Halogenatome gleich oder verschieden sind und als Halogenatome vorzugsweise Fluor, Chlor, Brom, insbesondere Fluor stehen, wie Trifluormethylthio; Alkylendioxy mit vorzugsweise 1 oder 2 Kohlenstoffatomen wie Methylendioxy oder Ethylendioxy; halogensubstituiertes Alkylendioxy mit vorzugsweise 1 oder 2 Kohlenstoffatomen und vorzugsweise 1 bis 4, insbesondere 2 bis 3 Halogenatomen, wobei die Halogenatome gleich oder verschieden sind und als Halogenatome vorzugsweise Fluor oder Chlor, insbesondere Fluor stehen wie Difluormethylendioxy, Trifluorethylendioxy, Tetrafluorethylendioxy; Hydroxy; Halogen, vorzugsweise Fluor, Chlor, Brom und Jod, insbesondere Chlor und Brom; Cyano; Nitro; Amino; Monoalkyl- und Dialkylamino mit vorzugsweise 1 bis 4, insbesondere 1 oder 2 Kohlenstoffatomen je Alkylgruppe, wie Methylamino, Methyl- ethyl-amino, n.- und i.-Propylamino und Methyl-n.- Butylamino; Formyl; Carboxyl; Alkylcarbonyl mit vorzugsweise 2-4 Kohlenstoffatomen; Carbalkoxy mit vorzugsweise 2 bis 4, insbesondere 2 oder 3 Kohlenstoffatomen, wie Carbomethoxy und Carboethoxy; Sulfo ($-SO_3H$); Alkylsulfonyl mit vorzugsweise 1 bis 4, insbesondere 1 oder 2 Kohlenstoffatomen, wie Methylsulfonyl und Ethylsulfonyl; Arylsulfonyl mit vorzugsweise 6 oder 10 Arylkohlenstoffatomen, wie Phenylsulfonyl; Phenyl, Naphthyl, Phenoxy, Naphthoxy, Phenylthio, Napthylthio, die ihrerseits wieder substituiert sein können;

Ferner steht $R^9$ bevorzugt für die bei $R^4$ als bevorzugt angegebenen Reste.

$R^7$ steht bevorzugt für die bei $R^6$ als bevorzugt angegebenen Reste, mit Ausnahme der Reste $-NR^8R^9$ und $-OR^7$.

Besonders bevorzugt sind Verbindungen der Formel I, in welcher

$R^4$ für den Rest $-COR^6$ steht,

$R^6$ für den Rest $-NR^8R^9$ steht,

$R^8$ für Wasserstoff, Methyl, Ethyl steht.

$R^9$ für Phenyl steht, das gegebenenfalls substituiert ist durch $C_1$-$C_4$-Alkyl, insbesondere Methyl, $C_1$-$C_4$-Alkoxy, insbesondere Methoxy, Ethoxy, $C_1$-$C_4$-Halogenalkoxy, insbesondere Trifluormethoxy, Fluorchlorethoxy, $C_1$-$C_4$-Halogenalkylthio, insbesondere Trifluormethylthio, Fluorchlormethylthio, $C_1$-$C_4$-Alkylthio, insbesondere Methylthio, Halogensulfonyl, insbesondere Fluorsulfonyl, Chlorsulfonyl, $C_1$-$C_4$-Alkylsulfonyl, insbesondere Methylsulfonyl, $C_1$-$C_4$-Halogenalkylsulfonyl, insbesondere Trifluormethylsulfonyl, $C_1$-$C_4$-Halogenalkyl, insbesondere Trifluormethyl, Methylendioxy oder Ethylendioxy, die gegebenenfalls durch Fluor oder Chlor substituiert sind, Halogen, insbesondere Fluor oder Chlor, $NO_2$, Phenoxy, das gegebenenfalls durch einen der oben angegebenen Reste substituiert ist.

Ganz besonders bevorzugt sind Verbindungen der Formel I, in welcher

$R^4$ für den Rest $-CONR^8R^9$ steht,

$R^8$ für Wasserstoff steht,

$R^9$ für Phenyl steht, das gegebenenfalls substituiert ist durch Halogen, insbesondere Chlor, $NO_2$, $CF_3$, $OCF_3$, $SO_2F$, $SCF_3$, $SCF_2Cl$, $SOCF_3$, $SO_2CF_3$, $OCH_3$, $OCF_2CF_2H$, Phenoxy, das durch Trifluormethyl substituiert ist, Fluor-chlor-substituiertes Ethylendioxy, Methyl, Ethyl.

Im einzelnen seien folgende Verbindungen der Formel I genannt, in welcher $X^1$ für O steht, $X^2$, n und $R^2$, $R^3$, $R^4$ die folgenden Bedeutungen haben:

$X^2$ = O  n = 3  $R^3$ = H  $R^4$ = $CONR^8R^9$

| $R^2$ | $R^8$ | $R^9$ |
|---|---|---|
| $C_6H_5$ | H | 3-Cl,4-$CF_3C_6H_3$ |
| $CH_3$ | H | 4-$OCF_2CF_2HC_6H_4$ |
| $-CH_3$ | H | 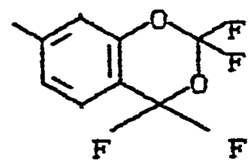 |
| $-CH_3$ | $-CH_3$ | 4-$OCF_3C_6H_4$ |
| $-C_2H_5$ | H | 4-$SCF_3C_6H_4$ |
| $-CH_3$ | H | 3-Cl, 4-$SCF_3C_6H_3$ |
| $-C_6H_5$ | $C_2H_5$ | 3,4-$Cl_2C_6H_3$ |
| $-CH_3$ | H | 4-$OCF_3C_6H_4$ |
| $-CH_3$ | H | 4-$SCF_3C_6H_4$ |
| $-C_6H_5$ | H | 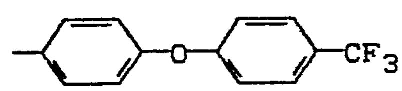 |
| $-C_6H_5$ | H | 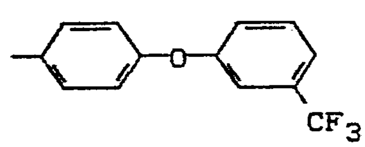 |

| $R^2$ | | $R^8$ | $R^9$ |
|---|---|---|---|
| $-C_6H_5$ | | $CH_3$ | 3-Cl, $4-CF_3C_6H_3$ |
| $iC_3H_7$ | | H | $4-SCF_3C_6H_4$ |
| $-C_6H_5$ | | H | 3-Cl, $4-SCF_3C_6H_4$ |
| $-4C_6H_4Cl$ $-(R^3)-$ | | H | $4-OCF_3C_6H_4$ |
| $-CH_3$ | $-CH_3$ | H | 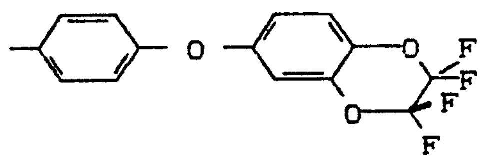 |
| $-CH_3$ | $-iC_3H_7$ | H | $3,4-(CF_3)_2C_6H_3$ |
| $-CH_3$ | $-CH_3$ | H | $3,CF_3$, $4NO_2C_6H_3$ |
| $-C_6H_5$ | $-CH_3$ | H | 3-Cl, $4-SCF_2ClC_6H_3$ |
| $-CH_3$ | $-CH_3$ | H | $3-CF_3$, $4ClC_6H_3$ |
| $-C_2H_5$ | $-C_2H_5$ | H | 3-Cl, $4-SCF_3C_6H_3$ |

Als Basen, mit denen die Verbindungen der Formel I Salze bilden können, seien genannt: Alkali- und Erdalkalihydroxide, Ammoniak, primäre, sekundäre und tertiäre Amine. Besonders bevorzugt seien folgende Basen genannt: Triethylamin, Isopropylamin, t-Butylamin, Pyridin, Picoline, Trimethylamin, Diisopropylamin, Morpholin, Pyrolidin, Hexamethylenimin, Piperazin, N-Methylpiperazin.

Setzt man bei Verfahren 2 a zur Herstellung der neuen bicyclischen Diazaphosphorverbindungen als Verbindung der Formel II 1-Methyl-1,10-Diaza-9-phospha-8-oxa-decalin 2,4,9-trion und als Verbindung der Formel III p-Bromphenylisocyanat ein, so läßt sich das Verfahren durch folgendes Formelschema wiedergeben:

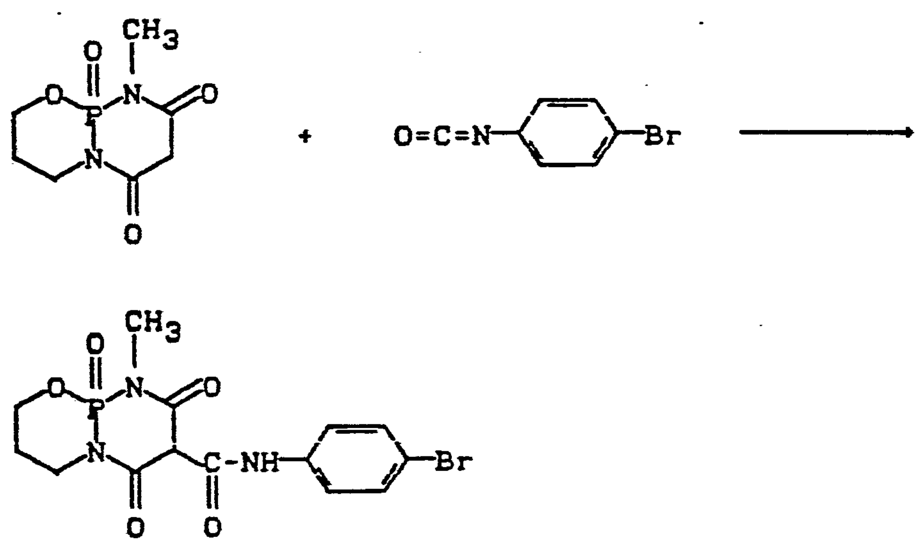

Bevorzugt werden Verbindungen der Formel II eingesetzt, in denen n, $X^1$, $X^2$ und die Substituenten $R^2$, $R^3$ die bei den Verbindungen der Formel I angegebenen bevorzugten und besonders bevorzugten Bedeutungen besitzen. Im einzelnen seien die folgenden Verbindungen der Formel II genannt:

1-Phenyl-1,10-diaza-8-oxa-9-phosphadecalin-2,4,9-trion,1-Methyl-1,10-diaza-8-oxa-9-phosphadecalin-2,4,9-trion, 1-Isopropyl-1,10-diaza-8-thia-9-phosphadecalin-2,4-9-trion, 1,8-Diphenyl-1,8,10-triaza-9-phosphadecalin 2,4,9-trion, 1-Phenyl-1,10-diaza-8-oxa-9-phosphadecalin-2,4-dion-9-thion, 1-p-Methoxyphenyl-1,10-diaza-8-oxa-9-phosphadecalin-2,4,9-trion, 1,5,6-Trimethyl-1,10-diaza-8-oxa-9-phosphadecalin-2,4,9-trion, 1-Methyl-bicyclo[5.4.0]-1,11-diaza-9-oxa-10-phosphaundecan-2,4,10-trion.

Bevorzugt werden Isocyanate der Formel III eingesetzt, in denen der Substituent

$R^5$ für geradkettiges, verzweigtes oder cyclisches Alkyl mit bis zu 20 C-Atomen, das gegebenenfalls substituiert ist durch Halogen, insbesondere Chlor, Fluor, Brom, $C_{1-4}$-Alkoxy, insbesondere Methoxy, Ethoxy, steht, ferner für Phenyl steht, das gegebenenfalls substituiert ist durch Alkyl mit vorzugsweise 1 bis 4, insbesondere 1 oder 2 Kohlenstoffatomen, wie Methyl, Ethyl, n.- und i.-Propyl und n.-, i.-s.- und t.-Butyl; Alkoxy mit vorzugsweise 1 bis 4, insbesondere 1 oder 2 Kohlenstoffatomen, wie Methoxy, Ethoxy, n.-und i.-Propyloxy und n.-, i.- s.- und t.-Butyloxy; Alkylthio mit vorzugsweise 1 bis 4, insbesondere 1 oder 2 Kohlenstoffatomen, wie Methylthio, Ethylthio, n.-und i.-Propylthio und n.-, i.- s.- und t.-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl, Fluor-, Chlorethyl; Halogenalkoxy mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome vorzugsweise Fluor, Chlor, Brom, insbesondere Fluor stehen wie Trifluormethoxy; Halogenalkylthio mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome vorzugsweise Fluor, Chlor, Brom, insbesondere Fluor stehen, wie Trifluormethylthio; Alkylendioxy mit vorzugsweise 1 oder 2 Kohlenstoffatomen wie Methylendioxy oder Ethylendioxy; halogensubstituiertes Alkylendioxy mit vorzugsweise 1 oder 2 Kohlenstoffatomen und vorzugsweise 1 bis 4, insbesondere 2 bis 3 Halogenatomen, wobei die Halogenatome gleich oder verschieden sind und als Halogenatome vorzugsweise Fluor oder Chlor, insbesondere Fluor stehen wie Difluormethylendioxy, Trifluorethylendioxy, Tetrafluorethylendioxy; Hydroxy; Halogen, vorzugsweise Fluor, Chlor, Brom und Jod, insbesondere Chlor und Brom; Cyano; Nitro; Amino; Monoalkyl- und Dialkylamino mit vorzugsweise 1 bis 4, insbesondere 1 oder 2 Kohlenstoffatomen je Alkylgruppe, wie Methylamino, Methyl-ethyl-amino, n.-und i.-Propylamino und Methyl-n.-Butylamino; Formyl; Carboxyl; Alkylcarbonyl mit vorzugsweise 2-4 Kohlenstoffatomen; Carbalkoxy mit vorzugsweise 2 bis 4, insbesondere 2 oder 3 Kohlenstoffatomen, wie Carbomethoxy und Carboethoxy; Sulfo($-SO_3H$); Alkylsulfonyl mit vorzugsweise 1 bis 4, insbesondere 1 oder 2 Kohlenstoffatomen, wie Methylsulfonyl und Ethylsulfonyl; Arylsulfonyl mit vorzugsweise 6 oder 10 Arylkohlenstoffatomen, wie Phenylsulfonyl; Phenyl, Naphthyl, Phenoxy, Naphthoxy, Phenylthio, Napthylether, die ihrerseits wieder substituiert sein können.

Ferner steht

$R^5$ bevorzugt für die Reste $-CO(S)R^{13}$ und $-COOR^{14}$ oder wobei

$R^{13}$ für Phenyl steht, das gegebenenfalls substituiert ist durch Alkyl mit vorzugsweise 1 bis 4, insbesondere 1 oder 2 Kohlenstoffatomen, wie Methyl, Ethyl, n.- und i.-Propyl und n.-, i.- und t.-Butyl; Alkoxy mit vorzugsweise 1 bis 4, insbesondere 1 oder 2 Kohlenstoffatomen, wie Methoxy, Ethoxy, n.- und i.-Propyloxy und n.-, i.- s.- und t.-Butyloxy; Alkylthio mit vorzugsweise 1 bis 4, insbesondere 1 oder 2 Kohlenstoffatomen, wie Methylthio, Ethylthio, n.- und i.-Propylthio und n.-, i.- s.- und t.-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl, Fluor-Chlorethyl; Halogenalkoxy mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome vorzugsweise Fluor, Chlor, Brom, insbesondere Fluor stehen wie Trifluormethoxy; Halogenalkylthio mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome vorzugsweise Fluor, Chlor, Brom, insbesondere Fluor stehen, wie Trifluormethylthio; Alkylendioxy mit vorzugsweise 1 oder 2 Kohlenstoffatomen wie Methylendioxy oder Ethylendioxy; halogensubstituiertes Alkylendioxy mit vorzugsweise 1 oder 2 Kohlenstoffatomen und vorzugsweise 1 bis 4, insbesondere 2 bis 3 Halogenatomen, wobei die Halogenatome gleich oder verschieden sind und als Halogenatome vorzugsweise Fluor oder Chlor, insbesondere Fluor stehen wie Difluormethylendioxy, Trifluorethylendioxy, Tetrafluorethylendioxy; Hydroxy; Halogen, vorzugsweise Fluor, Chlor, Brom und Jod, insbesondere Chlor und

Brom; Cyano; Nitro; Amino; Monoalkyl- und Dialkylamino mit vorzugsweise 1 bis 4, insbesondere 1 oder 2 Kohlenstoffatomen je Alkylgruppe, wie Methylamino, Methyl-ethyl-amino, n.-und i.-Propylamino und Methyl-n.-Butylamino; Formyl; Carboxyl; Alkylcarbonyl mit vorzugsweise 2-4 Kohlenstoffatomen; Carbalkoxy mit vorzugsweise 2 bis 4, insbesondere 2 oder 3 Kohlenstoffatomen, wie Carbomethoxy und Carboethoxy; Sulfo ($-SO_3H$); Alkylsulfonyl mit vorzugsweise 1 bis 4, insbesondere 1 oder 2 Kohlenstoffatomen, wie Methylsulfonyl und Ethylsulfonyl; Arylsulfonyl mit vorzugsweise 6 oder 10 Arylkohlenstoffatomen, wie Phenylsulfonyl; Phenyl, Naphthyl, Phenoxy, Naphthoxy, Phenylthio, Napthylthio, die ihrerseits wieder substituiert sein können,

und wobei

$R^{14}$ für geradkettiges, verzweigtes oder cyclisches Alkyl mit bis zu 20 C-Atomen, das gegebenenfalls substituiert ist durch Halogen, insbesondere Chlor, Fluor, Brom, $C_{1-4}$-Alkoxy, insbesondere Methoxy, Ethoxy, steht, ferner für Phenyl steht, das gegebenenfalls substituiert ist durch Alkyl mit vorzugsweise 1 bis 4, insbesondere 1 oder 2 Kohlenstoffatomen, wie Methyl, Ethyl, n.- und i.-Propyl und n.-, i.- s.- und t.-Butyl; Alkoxy mit vorzugsweise 1 bis 4, insbesondere 1 oder 2 Kohlenstoffatomen, wie Methoxy, Ethoxy, n.-und i.-Propyloxy und n.-, i.- und t.-Butyloxy; Alkylthio mit vorzugsweise 1 bis 4, insbesondere 1 oder 2 Kohlenstoffatomen, wie Methylthio,

Ethylthio, n.-und i.-Propylthio und n.-, i.-, s.- und t.-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl, Fluor-, Chlorethyl; Halogenalkoxy mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome vorzugsweise Fluor, Chlor, Brom, insbesondere Fluor stehen wie Trifluormethoxy; Halogenalkylthio mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome vorzugsweise Fluor, Chlor, Brom, insbesondere Fluor stehen, wie Trifluormethylthio; Alkylendioxy mit vorzugsweise 1 oder 2 Kohlenstoffatomen wie Methylendioxy oder Ethylendioxy; halogensubstituiertes Alkylendioxy mit vorzugsweise 1 oder 2 Kohlenstoffatomen und vorzugsweise 1 bis 4, insbesondere 2 bis 3 Halogenatomen, wobei die Halogenatome gleich oder verschieden sind und als Halogenatome vorzugsweise Fluor oder Chlor, insbesondere Fluor stehen wie Difluormethylendioxy, Trifluorethylendioxy, Tetrafluorethylendioxy; Hydroxy; Halogen, vorzugsweise Fluor, Chlor, Brom und Jod, insbesondere Chlor und Brom; Cyano; Nitro; Amino; Monoalkyl- und

Dialkylamino mit vorzugsweise 1 bis 4, insbesondere 1 oder 2 Kohlenstoffatomen je Alkylgruppe, wie Methylamino, Methyl-ethyl-amino, n.- und i.-Propylamino und Methyl-n.-Butylamino; Formyl; Carboxyl; Alkylcarbonyl mit vorzugsweise 2-4 Kohlenstoffatomen; Carbalkoxy mit vorzugsweise 2 bis 4, insbesondere 2 oder 3 Kohlenstoffatomen, wie Carbomethoxy und Carboethoxy; Sulfo ($-SO_3H$); Alkylsulfonyl mit vorzugsweise 1 bis 4, insbesondere 1 oder 2 Kohlenstoffatomen, wie Methylsulfonyl und Ethylsulfonyl; Arylsulfonyl mit vorzugsweise 6 oder 10 Arylkohlenstoffatomen, wie Phenylsulfonyl; Phenyl, Naphthyl, Phenoxy, Naphthoxy, Phenylthio, Napthylthio, die ihrerseits wieder substituiert sein können.

Besonders bevorzugt werden Verbindungen der Formel III eingesetzt, in denen der Substituent

$R^{13}$ für Phenyl steht, das gegebenenfalls substituiert ist durch $C_1$-$C_4$-Alkyl, insbesondere Methyl, $C_1$-$C_4$-Alkoxy, insbesondere Methoxy, Ethoxy, $C_1$-$C_4$-Halogenalkoxy, insbesondere Trifluormethoxy, Fluor-Chlorethoxy, $C_1$-$C_4$-Halogenalkylthio, insbesondere Trifluormethylthio, $C_1$-$C_4$-Alkylthio, insbesondere Methylthio, Halogensulfonyl, insbesondere Fluorsulfonyl, Chlorsulfonyl, $C_1$-$C_4$-Alkylsulfonyl, insbesondere Methylsulfonyl, $C_1$-$C_4$-Halogenalkylsulfonyl, insbesondere Trifluormethylsulfonyl, $C_1$-$C_4$-Halogenalkyl, insbesondere Trifluormethyl, Methylendioxy oder Ethylendioxy, die gegebenenfalls durch Fluor oder Chlor substituiert sind, Halogen, insbesondere Fluor oder Chlor, $NO_2$.

Ganz besonders bevorzugt werden Verbindungen der Formel III eingesetzt, in denen der Substituent

$R^{13}$ für Phenyl steht, das gegebenenfalls substituiert ist durch Halogen, insbesondere Chlor, $NO_2$, $CF_3$, $OCF_3$, $SO_2F$, $SCF_3$, $SOCF_3$, $SO_2CF_3$, $OCH_3$, $OCF_2CF_2H$, Phenoxy, das durch Trifluormethyl substituiert ist, Fluor-Chlor-substituiertes Ethylendioxy, Methyl, Ethyl.

Besonders bevorzugt werden Verbindungen der Formel III eingesetzt, in denen der Substituent

$R^{14}$ für geradkettiges, verzweigtes oder cyclisches Alkyl mit bis zu 6 C-Atomen steht, die gegebenenfalls substituiert sind durch Halogen wie Chlor und Fluor, Methoxy, Ethoxy, ferner für Phenyl steht, das gegebenenfalls substituiert ist durch $C_1$-$C_4$-Alkyl, insbesondere Methyl, $C_1$-$C_4$-Alkoxy, insbesondere Methoxy, Ethoxy, $C_1$-$C_4$-Halogenalkoxy, insbesondere Trifluormethoxy, Fluor-Chlorethoxy, $C_1$-$C_4$-Halogenalkylthio, insbesondere Trifluormethylthio, $C_1$-$C_4$-Alkylthio, insbesondere Methylthio, Halogensulfonyl, insbesondere Fluorsulfonyl, Chlorsulfonyl, $C_1$-$C_4$-Alkylsulfonyl, insbesondere Methylsulfonyl, $C_1$-$C_4$-Halogenalkylsulfonyl, insbesondere Trifluormethylsulfonyl, $C_1$-$C_4$-Halogenalkyl, insbesondere Trifluormethyl, Methylendioxy oder Ethylendioxy, die gegebenenfalls durch Fluor oder Chlor substituiert sind, Halogen, insbesondere Fluor oder Chlor.

Ganz besonders bevorzugt werden Verbindungen der Formel III eingesetzt, in denen der Substituent

$R^{14}$ für Methyl, Ethyl, Isopropyl, Cyclohexyl steht, ferner für Phenyl steht, das gegebenenfalls substituiert ist durch Halogen, insbesondere Chlor, $NO_2$, $CF_3$, $OCF_3$, $SO_2F$, $SCF_3$, $SOCF_3$, $SO_2CF_3$, $OCH_3$, $OCF_2CF_2H$, Phenoxy, das durch Trifluormethyl substituiert ist, Fluor-Chlor-substituiertes Ethylendioxy, Methyl, Ethyl.

Im einzelnen seien folgende Verbindungen der Formel III genannt:
4-Fluorphenylisocyanat, 4-Chlorphenylisocyanat, 3,4-Dichlorphenylisocyanat, 2-, 3- und 4-Trifluormethylphenylisocyanat, 4-Trifluormethoxyphenylisocyanat, 4-Trifluormethylthiophenylisocyanat, 3-Chlor-4-trifluormethylphenylisocyanat, 4-Trifluormethylsulfonylphenylisocyanat, 4-Tetrafluorethoxyphenylisocyanat, Phenylisothiocyanat, 2-, 3- und 4-Chlorphenylisothiocyanat, 2-, 3- und 4-Trifluormethylphenylisothiocyanat, 3- und 4-Cl-Benzoylisocyanat, 3-und 4-Trifluormethylbenzoylisocyanat, 2,6-Dichlor- und 2,6-Difluorbenzoylisocyanat, Benzoylisothiocyanat, 2,6-Dichlor- und 2,6-Difluorbenzoylisothiocyanat, 2-, 3-und 4-Chlorphenylsulfonylisocyanat, 4-Methylphenylsulfonylisocyanat, 3,4-Dichlorphenylsulfonylisocyanat, Methoxy-, Ethoxy- und Isopropyloxycarbonylisocyanat und -isothiocyanat, 4-Methoxy-, 4-Trifluormethoxy- und 4-Trifluormethylthiophenoxycarbonylisocyanat und -isothiocyanat.

Verbindungen der Formeln II und III werden in Gegenwart von Verdünnungsmitteln und in Gegenwart von Basen sowie gegebenenfalls in Gegenwart weiterer Katalysatoren umgesetzt.

Als Basen seien genannt: Alkali-, Erdalkalialkoholate und tertiäre Amine. Besonders bevorzugt seien folgende Basen genannt: Triethylamin, Pyridin, Picoline, Trimethylamin, N-Methylmorpholin, N-Ethylpyrrolidin, Diazabicyclo(4,3,0)-undecen (DBU), 1,4-Diaza-bicyclo-2,2,2-octan (DABCO), Diazabicyclo(3,2,0)nonen (DBN).

Als Verdünnungsmittel kommen alle inerten organischen Lösungsmittel in Frage. Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Methylenchlorid, Ethylenchlorid, Chloroform, Tetrachlorkohlenstoff, Chlorbenzol und o-Dichlorbenzol, ferner Ether wie Diethyl- und Dibutylether, Glykoldimethylether und Diglykoldimethylether, Tetrahydrofuran und Dioxan, weiterhin Ketone, wie Aceton, Methylethyl-, Methylisopropyl- und Methylisobutylketon, außerdem Ester, wie Essigsäuremethylester und -ethylester, ferner Nitrile, wie z.B. Acetonitril und Propionitril, Benzonitril, Glutarsäuredinitril, darüber hinaus Amide, wie z.B. Dimethylformamid, Dimethylacetamid und N-Methylpyrrolidon, sowie Dimethylsulfoxid, Tetramethylensulfon und Hexamethylphosphorsäuretriamid.

Als Katalysatoren kommen die bei Umsetzungen mit Isocyanaten üblichen Katalysatoren infrage. Als solche seien

genannt: Metallkatalysatoren des Zn, Sn, Pb wie Dibutylzinndilaurat, Dibutylzinndioxid, Zinnoctoat, Bleioctoat, Zinkoctoat, Zinkchlorid, Zinkacetat.

Die Reaktion wird zwischen 0 und 150° C bevorzugt zwischen 20-50° C durchgeführt. Man arbeitet vorzugsweise unter Normaldruck.

Die Verbindungen der Formeln II und III werden in äquimolaren Mengen eingesetzt ein geringer Überschuß der einen oder anderen Komponente bringt keine wesentlichen Vorteile.

Die Aufarbeitung erfolgt in an sich bekannter Weise, z.B. durch Versetzen der Reaktionsmischung mit verdünnter Säure, Abfiltrieren des Produkts oder Abtrennen der organischen Phase und Abdestillieren des Lösungsmittels.

Setzt man beim Verfahren 2 b zur Herstellung der neuen bicyclischen Diazaphosphorverbindungen als Verbindung der Formel II 1-Isopropyl-1,10-diaza-8-oxa-9-phospha-decalin-2,4-dion-9-thion und als Verbindung der Formel IV Benzoylchlorid ein, so läßt sich das Verfahren durch folgendes Reaktionsschema darstellen:

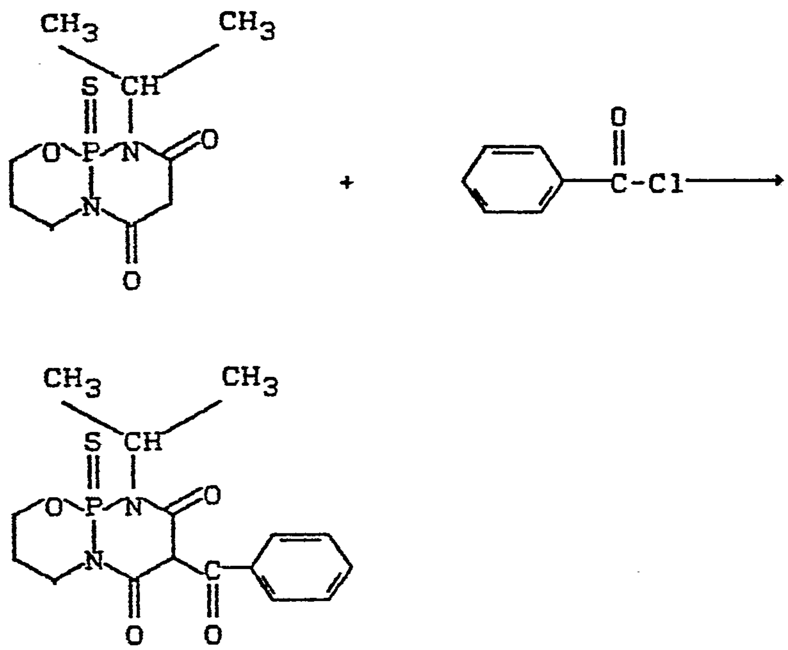

Je nach Reaktionsbedingungen kann dabei auch eine O-Acylierung auftreten, diese kann durch folgendes Formelschema wiedergegeben werden:

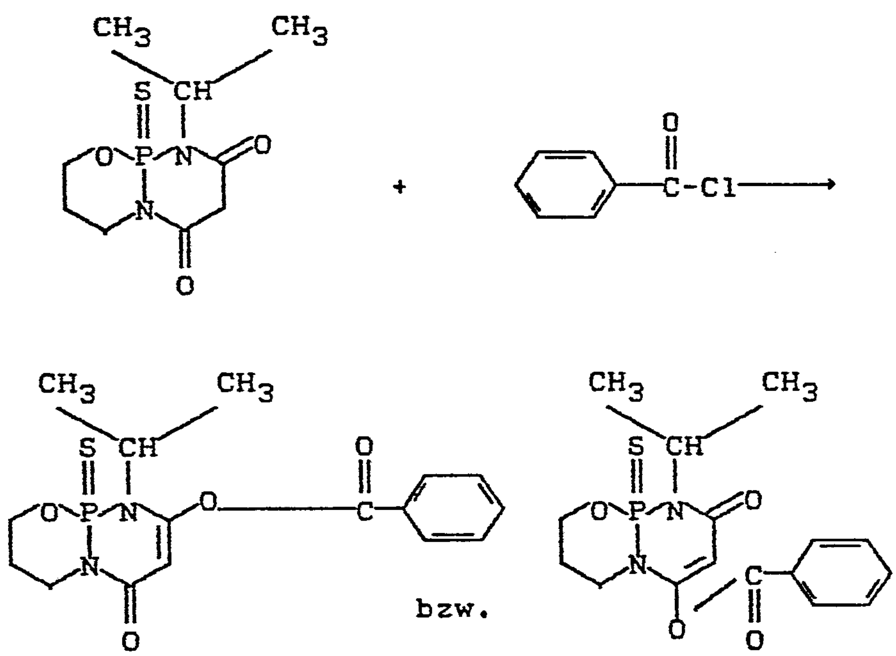

Die O-Acylierung führt zu den bei Verfahren 2 c angegebenen O-acylierten Verbindungen der Formeln V oder Va (vergleiche Verfahren 2c und Verfahren 6).

Das Verhältnis, in dem die C- und O-acylierten Verbindungen der Formeln I und V bzw. Va zueinander entstehen, hängt von den angewendeten Reaktionsbedingungen und insbesondere von der Art der eingesetzten Base ab.

C-Acylierung erfolgt bevorzugt, indem man bei möglichst tiefer Temperatur mit alkoholischen Alkoholatlösungen derart arbeitet, daß man jeweils äquivalente Mengen der Alkoholatlösung und von Verbindungen der Formel IV simultan und portionsweise zu der gekühlten Lösung von Verbindungen der Formel II in Alkohol gibt.

O-Acylierung erfolgt bevorzugt, indem man z.B. die Lösung von Verbindungen der Formel II in wasserfreiem Pyridin mit Verbindungen der FormelIV versetzt und wie üblich aufarbeitet.

Bevorzugt werden Verbindungen der Formel II eingesetzt, in denen n, $X^1$, $X^2$ und die Substituenten $R^2$, $R^3$ die bei den Verbindungen der Formel I genannten bevorzugten und besonders bevorzugten Bedeutungen besitzen.

Im einzelnen seien folgende Verbindungen der Formel IV genannt:
Benzoylchlorid, 4-Chlorbenzoylchlorid, 4-Trifluormethoxybenzoylchlorid, 4-Trifluormethylbenzoylchlorid, 2,6-Dichlorbenzoylchlorid, 3-Chlor-4-trifluormethylbenzoyl-

chlorid, 2,4,6-Trimethylbenzoylchlorid, Dimethylcarbamoylchlorid, N-Methyl-N-phenylcarbamoylchlorid, Chlorameisensäurepiperidid, Chlorameisensäuremorpholid, N-Methyl-N-(4-trifluormethyl)phenyl-carbamoylchlorid, Chlorameisensäure-methyl-, -ethyl-, -phenyl-, -p-chlorphenyl- und -p-trifluormethylester.

Verbindungen der Formeln II und IV werden bevorzugt in Gegenwart von Verdünnungsmitteln sowie in Gegenwart von Säurebindemitteln umgesetzt:

Als Verdünnungsmittel kommen die gebräuchlichen organischen Lösungsmittel in Frage. Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Methylenchlorid, Ethylenchlorid, Chloroform, Tetrachlorkohlenstoff, Chlorbenzol und o-Dichlorbenzol aliphatische Alkohole, wie Methanol, Ethanol, n- und i-Propanol, n-, i-, s- und t-Butanol, Pentanole, ferner Ether wie Diethyl-und Dibutylether, Glykoldimethylether und Diglykoldimethylether, Tetrahydrofuran und Dioxan, weiterhin Ketone, wie Aceton, Methylethyl-, Methylisopropyl- und Methylisobutylketon, außerdem Ester, wie Essigsäure-methylester und -ethylester, ferner Nitrile, wie z.B. Acetonitril und Propionitril, Benzonitril, Glutarsäuredinitril, darüber hinaus Amide, wie z.B. Dimethylformamid, Dimethylacetamid und N-Methylpyrrolidon, sowie Dimethylsulfoxid, Tetramethylensulfon und Hexamethylphosphorsäuretriamid.

Als Säurebindemittel seien genannt: Alkali-, Erdalkalialkoholate und tertiäre Amine. Besonders bevorzugt seien folgende Basen genannt: Triethylamin, Pyridin, Picoline, Trimethylamin, N-Methyl-morpholin, N-Ethyl-pyrrolidon, Diazabicyclo(4,3,0)undecen (DBU), 1,4-Diaza-bicyclo-2,2,2-octan (DABCO), Diazabicyclo(3,2,0)nonen (DBN).

Die Reaktion wird durchgeführt bei 0 - 150° C, bevorzugt bei 20 - 100° C, vorzugsweise unter Normaldruck.

Bevorzugt wird unter Schutzgasatmosphäre gearbeitet.

Die Verbindungen der Formeln II und IV werden bevorzugt in äquimolarem Verhältnis zueinander eingesetzt. Ein Überschuß der einen oder anderen Verbindung bringt keinen wesentlichen Vorteil. Die Säurebindemittel werden bevorzugt äquimolar oder in einem Überschuß bis zu 10 molar, bezogen auf die Verbindungen der Formel III eingesetzt. Werden tertiäre Amine als Säurebindemittel eingesetzt, können diese auch als Reaktionsmedium dienen.

Die Aufarbeitung erfolgt in an sich bekannter Weise, indem das ausgeschiedene Salz abfiltriert wird und die organische Phase eingeengt wird oder indem das Reaktionsgemisch in Wasser eingegossen wird und die organische Phase nach Abtrennung eingeengt wird.

Wie bei Verfahren 2 b erwähnt, kann es bei der Umsetzung von Verbindungen der Formel II mit Verbindungen der Formel IV ganz oder teilweise zu O-Acylierungen kommen. Die dabei erhaltenen O-acylierten Verbindungen der Formel V können direkt oder nach Abtrennung zu Verbindungen der Formel I umgelagert werden.

Bevorzugt sind Verbindungen der Formel V bzw. Va in welcher n, $X^1$, $X^2$, $R^2$, $R^3$ die bei den Verbindungen der Formel I als bevorzugt angegebenen Bedeutungen besitzen und, in welcher $R^{10}$ für die Reste -CO(S)$R^6$ steht, wobei $R^6$ und n die bei den Verbindungen der Formel I als bevorzugt und besonders bevorzugt genannten Definitionen besitzt.

Im einzelnen seien folgende Verbindungen der Formel V genannt:

| n | $X^1$ | $X^2$ | $R^2$ | $R^3$ | $R^{10}$ |
|---|---|---|---|---|---|
| 3 | O | O | $CH_3$ | H | 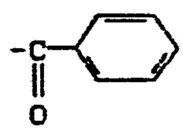 |
| 3 | O | O | $CH_3$ | H | 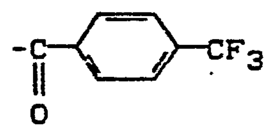 |
| 3 | O | S | $CH_3$ | H | 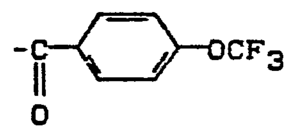 |
| 3 | S | O | $iC_3H_7$ | H | 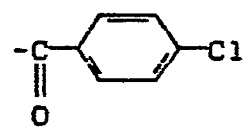 |
| 3 | O | N-Ph | $CH_3$ | H | 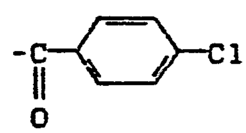 |
| 3 | O | O | $C_6H_5$ | H | 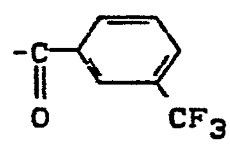 |

| n | $X^1$ | $X^2$ | $R^2$ | $R^3$ | $R^{10}$ |
|---|---|---|---|---|---|
| 3 | S | O | $C_6H_5$ | H | 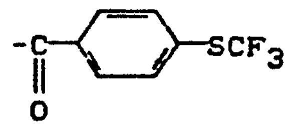 |
| 4 | O | O | $CH_3$ | H | 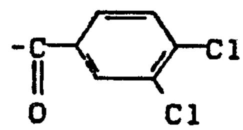 |

Die Verbindungen der Formel V bzw. Va sind neu. Sie können auch direkt ohne weitere Umlagerung allein oder im Gemisch mit den entsprechenden C-acylierten Verbindungen der Formel I als Wirkstoffe zur Bekämpfung von Ekto- und Endoparasiten eingesetzt werden.

Verfahren 2c wird durchgeführt, indem man die Verbindungen der Formeln V bzw. Va in Gegenwart von Verdünnungsmitteln mit starken Basen umsetzt.

Die Reaktion wird durchgeführt bei Temperaturen von 0° bis 150° C, bevorzugt bei 50 - 100° C.

Es wird bei Normaldruck gearbeitet.

Als starke Basen dienen bevorzugt 4-Dimethyl- oder 4-Diethyl-aminopyridin.

Die Basen werden den Verbindungen der Formeln V bzw. VA im Verhältnis 1:10, bevorzugt 1:100, zugesetzt.

Als Verdünnungsmittel kommen alle inerten organischen Lösungsmittel in Frage. Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Methylenchlorid, Ethylenchlorid, Chloroform, Tetrachlorkohlenstoff, Chlorbenzol und o-Dichlorbenzol, ferner Ether wie Diethyl- und Dibutylether, Glykoldimethylether und Diglykoldimethylether, Tetrahydrofuran und Dioxan, weiterhin Ketone, wie Aceton, Methylethyl-, Methylisopropyl- und Methylisobutylketon, außerdem Ester, wie Essigsäuremethylester und -ethylester, ferner Nitrile, wie z.B. Acetonitril und Propionitril, Benzonitril, Glutarsäuredinitril, darüber hinaus Amide, wie z.B. Dimethylformamid, Dimethylacetamid und N-Methylpyrrolidon, sowie Dimethylsulfoxid, Tetramethylensulfon und Hexamethylphosphorsäuretriamid.

Die Aufarbeitung erfolgt in üblicher Weise: Eingießen in verdünnte Säure und Abfiltrieren oder Abtrennen der organischen Phase und anschließendes Einengen.

Setzt man bei Verfahren 2 d als Verbindung der Formel VI 3-Carbethoxy-1,10-diaza-8-thia-9-phosphadecalin-2,4,9-trion und als Amin der Formel VII N-Methyl-4-chloranilin ein, so läßt sich das Verfahren durch folgendes Formelschema darstellen:

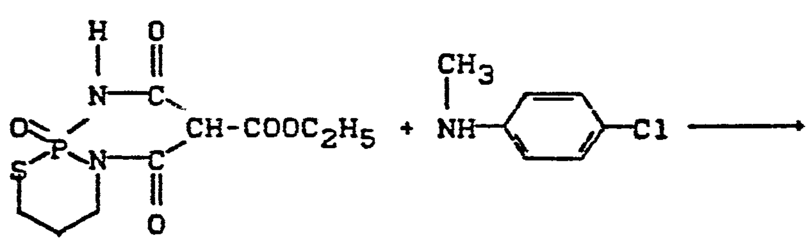

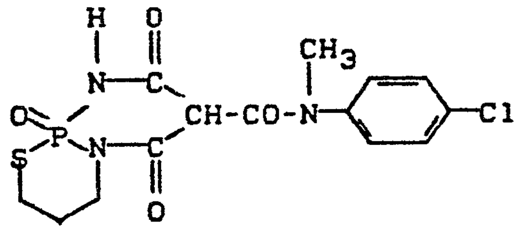

Verbindungen der Formel VI sind neu. Ihre Herstellung erfolgt wie bei Verfahren 2b angegeben. Bevorzugt sind die Verbindungen der Formel VI, in denen n, $X^1$, $X^2$, $R^2$ und $R^3$, die bei den Verbindungen der Formel I als bevorzugt und besonders bevorzugt genannten Bedeutungen besitzen, und bei denen $R^{11}$ für Methyl, Ethyl, p-Nitrophenyl steht.

Die Amine der Formel VII sind bekannt oder lassen sich analog zu bekannten Verfahren herstellen.

Bevorzugt werden Amine der Formel VII eingesetzt, in denen die Substituenten $R^8$ und $R^9$ die bei den Verbindungen der Formel I genannten bevorzugten und besonders bevorzugten Bedeutungen besitzen.

Im einzelnen seien folgende Verbindungen der Formel VII genannt:

4-Nitroanilin, 3-Chlor-4-trifluormethylanilin, 3-Trifluormethyl-4-chloranilin, 4-Trifluormethoxy anilin, 4-Trifluormethylmercaptoanilin, 3-Chlor-4-trifluormethoxy anilin, 3-Chlor-4-trifluormethylmercaptoanilin, 3-Nitro-4-trifluormethylanilin, Trifluormethyl-4-aminophenyl-sulfon, 4-(1,1,2,2-Tetrafluorethoxy)-anilin, 2,6-Dichlor-4-tri-

fluormethylmercapto-anilin, 4-Amino-4'-trifluormethyl-diphenylether, 4-Amino-3'-trifluormethyl-diphenylether;

Die Umsetzung der Verbindungen der Formel VI und VII erfolgt vorzugsweise in Gegenwart von Verdünnungsmitteln sowie in Gegenwart von Basen.

Als Verdünnungsmittel kommen alle inerten organischen Lösungsmittel in Frage. Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Methylenchlorid, Ethylenchlorid, Chloroform, Tetrachlorkohlenstoff, Chlorbenzol und o-Dichlorbenzol, ferner Ether wie Diethyl- und Dibutylether, Glykoldimethylether und Diglykoldimethylether, Tetrahydrofuran und Dioxan, weiterhin Ketone, wie Aceton, Methylethyl-, Methylisopropyl- und Methylisobutylketon, außerdem Ester, wie Essigsäuremethylester und -ethylester, ferner Nitrile, wie z.B. Acetonitril und Propionitril, Benzonitril, Glutarsäuredinitril, darüber hinaus Amide, wie z.B. Dimethylformamid, Dimethylacetamid und N-Methylpyrrolidon, sowie Dimethylsulfoxid, Tetramethylensulfon und Hexamethylphosphorsäuretriamid, ferner Alkohole wie Methanol, Ethanol, Propanol, Butanol.

Als Basen seien genannt Alkali- und Erdalkalihydroxide, Alkali- und Erdalkalialkoholate, insbesondere Natriummethylat oder -ethylat.

Die Reaktion wird zwischen 50 und 150° C bevorzugt zwischen 60-110° C durchgeführt. Man arbeitet vorzugsweise unter Normaldruck.

Die Verbindungen der Formeln VI und VII werden in äquimolaren Mengen eingesetzt ein geringer Überschuß der einen oder anderen Komponente bringt keine wesentlichen Vorteile.

Die Aufarbeitung erfolgt in an sich bekannter Weise, z.B. durch Versetzen der Reaktionsmischung mit Wasser, Abtrennen der organischen Phase und Abdestillieren des Lösungsmittels.

Verbindungen der Formel II sind neu. Bevorzugt seien Verbindungen der Formel II genannt, in welcher n, $X^1$, $X^2$ und die Substituenten $R^1$, $R^2$, $R^3$ die bei den Verbindungen der Formel I genannten bevorzugten und besonders bevorzugten Bedeutungen besitzen.

Im einzelnen seien folgende Verbindungen der Formel II genannt:

| n | $X^1$ | $X^2$ | $R^2$ | $R^2$ |
|---|---|---|---|---|
| 3 | S | O | $iC_3H_7$ | H |
| 3 | S | O | $-CH_2C_6H_5$ | H |
| 3 | O | O | $-C_6H_5$ | H |
| 3 | O | O | $4-C_6H_4OCH_3$ | H |
| 3 | O | O | $-CH_3$ | H |

| n | $X^1$ | $X^2$ | $R^2$ | $R^2$ |
|---|---|---|---|---|
| 3 | O | S | $CH_3$ | H |
| 4 | O | O | $CH_3$ | H |
| 3 | O | O | $CH_3$ | $C_6H_5$ |
| 3 | O | $>N_6H_5$ | $CH_3$ | H |
| 3 | S | $>NCH_3$ | $CH_3$ | H |
| 3 | S | S | $iC_3H_7$ | H |

Setzt man bei Verfahren 4 als Verbindung der Formel VIII 2-Methylamino-tetrahydro-2H-1,3,2-oxazaphosphorin 2-oxid und als Verbindung der Formel IX Malonsäuredichlorid ein, so läßt sich der Reaktionsverlauf bei Verfahren 4 durch folgendes Formelschema wiedergeben:

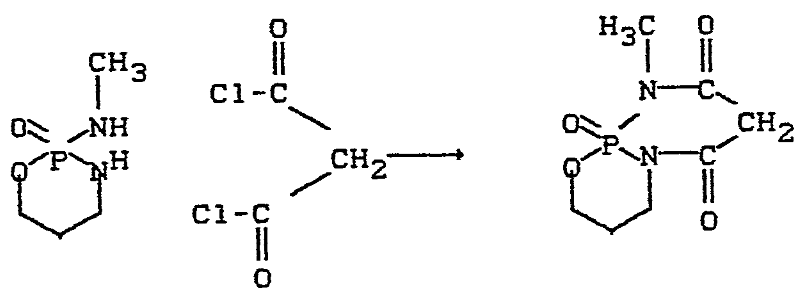

Die Verbindungen der Formeln VIII und IX sind bekannt oder lassen sich analog zu bekannten Verfahren darstellen. (Hamacher, Arch. Pharm. 310 (1977) 428)

Bevorzugt werden folgende Verbindungen der Formel VIII eingesetzt:

2-Phenylamino-tetrahydro-2H-1,3,2-oxazaphosphorin-2-oxid, 2-Isopropylamino-tetrahydro-2-H-1,3,2-oxazaphosphorin-2-sulfid, 2-Benzylamino-tetrahydro-2H-1,3,2-oxazaphosphorin-2-sulfid, 2-Methylamino-1-phenyl-1,3,2-diazaphosphorin-2-oxid, 2-Phenylamino-tetrahydro-2H-1,3,2-thiazaphosphorin-2-oxid, 2-(4-Chlorphenyl)amino-tetrahydro-2H-1,3,2-oxaza-phosphorin-2-oxid.

Bevorzugt werden folgende Verbindungen der Formel IX eingesetzt:

Malonsäure, Malonsäuredichlorid, Malonsäuredimethylester, Malonsäurediethylester, Malonsäure-di-n- und di-i.propylester, Malonsäuredibutylester, Malonsäurediphenylester.

Die Verbindungen der Formeln VIII und IX werden vorzugsweise in Gegenwart von Verdünnungsmitteln und gegebenenfalls in Gegenwart von wasserabspaltenden Kondensationsmitteln oder Katalysatoren umgesetzt.

Als Verdünnungsmittel kommen alle inerten organischen Lösungsmittel in Frage. Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Methylenchlorid, Ethylenchlorid, Chloroform, Tetrachlorkohlenstoff, Chlorbenzol und o-Dichlorbenzol, ferner Ether wie

Diethyl- und Dibutylether, Glykoldimethylether und Diglykoldimethylether, Tetrahydrofuran und Dioxan, weiterhin Ketone, wie Aceton, Methylethyl-, Methylisopropyl- und Methylisobutylketon, außerdem Ester, wie Essigsäuremethylester und -ethylester, ferner Nitrile, wie z.B. Acetonitril und Propionitril, Benzonitril, Glutarsäuredinitril, darüber hinaus Amide, wie z.B. Dimethylformamid, Dimethylacetamid und N-Methylpyrrolidon, sowie Dimethylsulfoxid, Tetramethylensulfon und Hexamethylphosphorsäuretriamid.

Die Reaktion wird zwischen 0 und 150°C bevorzugt zwischen 0-110°C durchgeführt. Man arbeitet vorzugsweise unter Normaldruck.

Die Verbindungen der Formeln VIII und IX werden in äquimolaren Mengen eingesetzt, ein geringer Überschuß der einen oder anderen Komponente bringt keine wesentlichen Vorteile.

Werden als Verbindungen der Formel IX Malonsäurehalogenide eingesetzt, so wird die bei der Reaktion entstehende Halogenwasserstoffsäure durch Erhitzen oder Durchblasen von inerten Gasen ausgetrieben.

Wird als Verbindung der Formel IX Malonsäure eingesetzt, so arbeitet man in Gegenwart von wasserabspaltenden Kondensationsmitteln wie z. B. Carbodiimide wie Dicyclohexylcarbodiimid.

Die Kondensation kann auch durch azeotrope Abdestillation des entstehenden Wassers mit geeigneten Schleppmitteln erfolgen.

Werden als Verbindungen der Formel IX Malonester eingesetzt, so arbeitet man in Gegenwart von Alkoholaten wie z. B. Alkali- oder Erdalkalimethylat, -ethylat, -propylat, -isopropylat, -butylat, -phenolat. Dabei kann auch in Gegenwart von Alkoholen gearbeitet werden.

Die Verbindungen der Formeln V bzw. Va sind neu. Bevorzugt seien Verbindungen der Formeln V bzw. Va genannt, in welchen n, $X^1$, $X^2$ und die Substituenten $R^2$, $R^3$ die bei den Verbindungen der Formel I bevorzugt genannten Bedeutungen besitzt, und $R^{10}$ die weiter oben angegebenen bevorzugten Bedeutungen besitzt. Ihre Herstellung erfolgt wie weiter oben angegeben durch Acylierung der Verbindungen der Formel II und Abtrennung der dabei auch entstehenden C-acylierten Verbindungen [vergleiche Verfahren 2c (oben)].

Die Verbindungen der Formeln V bzw. Va können, wie bereits erwähnt, auch direkt ohne weitere Umlagerung zu den C-acylierten Verbindungen allein oder im Gemisch mit den entsprechenden C-acylierten Verbindungen der Formel I als Wirkstoffe zur Bekämpfung von Ekto- und Endoparasiten eingesetzt werden.

Die Wirkstoffe eignen sich zur Bekämpfung von tierischen Schädlingen, vorzugsweise Arthropoden und Nematoden, insbesondere Insekten und Spinnentieren, di ein der Landwirtschaft, in Forsten, im Vorrats- und Materialschutz sowie auf dem Hygienesektor vorkommen.

Sie eignen sich ferner als fungizide Mittel, besonders zur Bekämpfung von Oomyceten.

Die Wirkstoffe eignen sich bei günstiger Warmblütertoxizität zur Bekämpfung von tierischen Schädlingen, insbesondere Insekten, Spinnentieren, Nematoden, Trematoden und Cestoden die in der Tierhaltung vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.

Aus der Ordnung der Isoptera z.B. Reticulitermes spp.. Aus der Ordnung der Anoplura z.B. Phylloxera vastatrix, Pemphigus spp., Pediculus humanus corporis, Haematopinus spp., Linognathus spp. Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp. Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp. Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Simulium spp., Drosophila melanogaster, Musca spp., Lyperosia spp., Fannia spp., Calliphora erythrocephala, Lucilia spp., Chrysomyia spp., Cuterebra spp., Gastrophilus spp., Hyppobosca spp., Stomoxys spp.,

Melophagus spp., Oestrus spp., Hypoderma spp., Dermatobia, Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp. Ctenocephalides spp., Echidnophaga spp..
Aus der Ordnung der Arachnida z.B. Scorpio maurus, Latrodectus mactans.

Aus der Ordnung der Acarina z.B. Acarus siro, Argas spp., Otobius spec., Ornithodoros spp., Dermanyssus gallinae, Bdellonyssus spp., Eriophyes ribis, Phyllocoptruta oleivora, Boophilus spp., Rhipicephalus spp., Amblyomma spp., Hyalomma spp., Ixodes spp., Haemaphysalis spp., Dermacentor spp., Psoroptes spp., Chorioptes spp., Sarcoptes spp., Demodex spp., Psorergates spp., Myobia spp., Myocoptes spp., Notoedres spp., Octodectes spp., Varroa spp., Tarsonemus spp., Bryobia praetiosa, Panonychus spp., Tetranychus spp..

Aus der Ordnung der Pseudophyllidea z. B.: Diphyllobothrium spp., Spirometra spp., Schistocephalus spp., Ligula spp., Bothridium spp., Diplogonoporus spp..

Aus der Ordnung der Cyclophyllidea z. B.: Mesocestodes spp., Anoplocephala spp., Paranoplocephala spp., Monieazia spp., Thysanosoma spp., Thysaniezia spp., Avitellina spp., Stilesia spp., Cittotaenia spp., Andyra spp., Bertiella

spp., Taenia spp., Echinococcus spp., Hydatigera spp., Davainea spp., Raillietina spp., Hymenolepis spp., Echinolepis spp., Echinocotyle spp., Diorchis spp., Dipylidium spp., Joyeuxiella spp., Diplopylidium spp..

Aus der Unterklasse der Monogenea z. B.: Gyrodactylus spp., Dactylogyrus spp., Polystoma spp..

Aus der Unterklasse der Digenea z. B.: Diplostomum spp., Posthodiplostomum spp., Schistosoma spp., Trichobilharzia spp., Ornithobilharzia spp., Austrobilharzia spp., Gigantobilharzia spp., Leucochloridium spp., Brachylaima spp., Echinostoma spp., Echinoparyphium spp., Echinochasmus spp., Hypoderaeum spp., Fasciola spp., Fasciolides spp., Fasciolopsis spp., Cyclocoelum spp., Typhlocoelum spp., Paramphistomum spp., Calicophoron spp., Cotylophoron spp., Gigantocotyle spp., Fischoederius spp., Gastrothylacus spp., Notocotylus spp., Catatropis spp., Plagiorchis spp., Prosthogonimus spp., Dicrocoelium spp., Eurytrema spp., Troglotrema spp., Paragonimus spp., Collyriclum spp., Nanophyetus spp., Opisthorchis spp., Clonorchis spp., Metorchis spp., Heterophyes spp., Metagonimus spp..
Aus der Ordnung der Enoplida z. B.: Trichuris spp., Capillaria spp., Trichomosoides spp., Trichinella spp..

Aus der Ordnung der Rhabditida z. B.: Micronema spp., Strongyloides spp..

Aus der Ordnung der Strongylida z. B.: Strongylus spp., Triodontophorus spp. Oesophagodontus spp., Trichonema spp., Gyalocephalus spp., Cylindropharynx spp., Poteriostomum spp., Cyclicocerus spp., Cylicostephanus spp., Oesophagostomum spp., Chabertia spp., Stephanurus spp., Ancylostoma spp., Uncinaria spp., Bunostomum spp., Globocephalus spp., Syngamus spp., Cyathostoma spp., Metastrongylus spp., Dictyocaulus spp., Muellerius spp., Protostrongylus spp., Neostrongylus spp., Cystocaulus spp., Pneumostrongylus spp., Spicocaulus spp., Elaphostrongylus spp., Parelaphostrongylus spp., Crenosoma spp., Paracrenosoma spp., Angiostrongylus spp., Aelurostrongylus spp., Filaroides spp., Parafilaroides spp., Trichostrongylus spp., Haemonchus spp., Ostertagia spp., Marshallagia spp., Cooperia spp., Nematodirus spp., Hyostrongylus spp., Obeliscoides spp., Amidostomum spp., Ollulanus spp..

Aus der Ordnung der Oxyurida z. B.: Oxyuris spp., Enterobius spp., Passalurus spp., Syphacia spp., Aspiculuris spp., Heterakis spp..

Aus der Ordnung der Ascaridida z. B.: Ascaris spp., Toxascaris spp., Toxocara spp., Parascaris spp., Anisakis spp., Ascaridia spp..

Aus der Ordnung der Spirurida z. B.: Gnathostoma spp., Physaloptera spp., Thelazia spp., Gongylonema spp., Habronema spp., Parabronema spp., Draschia spp., Dracunculus spp..

Aus der Ordnung der Filariida z. B.: Stephanofilaria spp., Parafilaria spp., Setaria spp., Loa spp., Dirofilaria spp., Litomosoides spp., Brugia spp., Wuchereria spp., Onchocerca spp..

Aus der Ordnung der Gigantorhynchida z. B.: Filicollis spp., Moniliformis spp., Macracanthorhynchus spp., Prosthenorchis spp..

Die Wirkstoffe können in die üblichen Formulierungen übergeführt werden, wie Lösungen, Emulsionen, Suspensionen, Pulver, Schäume, Pasten, Granulate, Aerosole, Wirkstoffimprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u. ä., sowie ULV-Kalt- und Warmnebel-Formulierungen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder

Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie

natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die erfindungsgemäßen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Die Anwendung geschieht in einer den Anwendungsformen angepaßten üblichen Weise.

Die erfindungsgemäßen Wirkstoffe eignen sich auch zur Bekämpfung von Arthropoden, die landwirtschaftliche Nutztiere, wie z.B. Rinder, Schafe, Ziegen, Pferde, Schweine, Esel, Kamele, Büffel, Kaninchen, Hühner, Puten, Enten, Gänse, Bienen, sonstige Haustiere wie z.B. Hunde, Katzen, Stubenvögel, Aquarienfische sowie sog. Versuchstiere, wie z.B. Hamster, Meerschweinchen, Ratten und Mäuse befallen, schließlich eignen sie sich auch zur Behandlung humanpathogener Arthropoden.

Die erfindungsgemäßen Wirkstoffe können zur Bekämpfung solcher Arthropoden sowohl prophylaktisch als auch therapeutisch angewandt werden. Durch die Bekämpfung dieser Arthropoden sollen Todesfälle und Leistungsminderungen (bei Fleisch, Milch, Wolle, Häuten, Eiern, Honig usw.) vermindert werden, so daß durch den Einsatz der erfindungsgemäßen Wirkstoffe eine wirtschaftlichere Tierhaltung möglich ist.

Die Anwendung der erfindungsgemäßen Wirkstoffe geschieht im Veterinärsektor in bekannter Weise durch enterale Verabreichung in Form von beispielsweise Tabletten, Kapseln, Tränken, Drenchen, Granulaten, Pasten, Boli, des feed-through-Verfahrens, von Zäpfchen, durch parenterale Verabreichung, wie zum Beispiel durch Injektionen (intramuskulär, subcutan, intravenös, intraperitonal u.a.), Implantate, durch nasale Applikation, durch dermale Anwendung in Form beispielsweise des Tauchens oder Badens (Dippen), Sprühens (Spray), Aufgießens (Pour-on und Spot-on), des Waschens, des Einpuderns sowie mit Hilfe von wirkstoffhaltigen Formkörpern, wie Halsbändern, Ohrmarken, Schwanzmarken, Gliedmaßenbändern, Halftern, Markierungsvorrichtungen usw.

Die erfindungsgemäßen Wirkstoffe sind breit wirksam gegen Endoparasiten. Sie wirken vor allem gegen Nematoden, insbesondere Magen- und Darmnematoden der Wiederkäuer. Darüber hinaus wirken sie auch gegen solche Magen- und Darmnematoden, die gegen die gebräuchlichen Benzimidazol-Anthelmintika resistent und damit nicht mehr ausreichend therapierbar sind.

Die Wirkung wurde im Tierversuch nach oraler, parenteraler und dermaler Applikation bei stark mit Parasiten befallenen Versuchstieren geprüft. Die angewendeten Dosierungen wurden sehr gut von den Versuchstieren vertragen.

Die erfindungsgemäßen Wirkstoffe können als Anthelmintika sowohl in der Human- als auch in der Veterinärmedizin verwendet werden.

Die erfindungsgemäßen Wirkstoffe können zusammen mit anderen üblichen Anthelmintika verabreicht werden.

Die erfindungsgemäßen Wirkstoffe können entweder als solche oder aber in Kombination mit pharmazeutisch annehmbaren Trägern zur Anwendung gelangen. Als Darreichungsformen in Kombination mit verschiedenen inerten Trägern kommen Tabletten, Kapseln, Granulate, wäßrige Suspensionen, injizierbare Lösungen, Emulsionen und Suspensionen, Elixiere, Sirup, Pasten und dergleichen in Betracht. Derartige Träger umfassen feste Verdünnungsmittel oder Füllstoffe, ein steriles, wäßriges Medium sowie verschiedene nicht toxische organische Lösungsmittel und dergleichen. Selbstverständlich können die für eine orale Verabreichung in Betracht kommenden Tabletten und dergleichen mit Süßstoffzusatz und ähnlichen versehen werden. Die therapeutisch wirksame Verbindung soll im vorgenannten Fall in einer Konzentration von etwa 0,5 bis 90 Gew.-% der Gesamtmischung vorhanden sein, d.h. in Mengen, die ausreichend sind, um den obengenannten Dosierungsspielraum zu erreichen.

Die Formulierungen werden in bekannter Weise hergestellt, z.B. durch Verstrecken der Wirkstoffe mit Lösungsmitteln und/oder Trägerstoffen, gegebenenfalls unter Verwendung von Emulgiermitteln und/oder Dispergiermitteln, wobei z.B. im Fall der Benutzung von Wasser als Verdünnungsmittel gegebenenfalls organische Lösungsmittel als Hilfslösungsmittel verwendet werden können.

Als Hilfsstoffe seien beispielhaft aufgeführt:
Wasser, nicht toxische organische Lösungsmittel, wie Paraffine (z.B. Erdölfraktionen), pflanzliche Öle (z.B. Erdnuß-(Sesamöl), Alkohole (z.B. Ethylalkohol, Glycerin), Glykole (z.B. Propylenglykol, Polyethylenglykol), feste Trägerstoffe, wie z.B. natürliche Gesteinsmehle (z.B. Kaoline, Tonerden, Talkum, Kreide) synthetische Gesteinsmehle (z.B. hochdisperse Kieselsäure, Silikate), Zucker (z.B. Rohr-, Milch- und Traubenzucker); Emulgiermittel, wie nicht ionogene und anionische Emulgatoren (z.B. Polyoxyethylen-Fettsäure-Ester, Polyoxyethylen-Fettalkohol-Ether, Alkylsulfonate und Arylsulfonate), Dispergiermittel (z.B. Methylcellulose, Stärke und Polyvinylpyrrolidon) und Gleitmittel (z.B. Magnesiumstearat, Talkum, Stearinsäure und Natriumlaurylsulfat).

Im Falle der oralen Anwendung können Tabletten selbstverständlich außer den genannten Trägerstoffen auch Zusätze wie Natriumcitrat, Calciumcarbonat und Dicalciumphosphat, zusammen mit verschiedenen Zuschlagstoffen, wie Stärke, vorzugsweise Kartoffelstärke, Gelatine und dergleichen, enthalten. Weiterhin können Gleitmittel, wie Magnesiumstearat, Natriumlaurylsulfat und Talkum, zum Tablettieren mitverwendet werden.

Im Falle wäßriger Suspensionen und/oder Elixieren, die für die orale Anwendung gedacht sind, können die Wirkstoffe außer mit den obengenannten Hilfsstoffen mit verschiedenen Geschmacksaufbesserern oder Farbstoffen versetzt werden.

Für den Fall der parenteralen Anwendung können Lösungen Dragees, Ampullen usw. auch in Form von Dosierungseinheiten sein, wobei jede Dosierungseinheit so angepaßt ist, daß sie eine einzelne Dosis des aktiven Bestandteils liefert.

Die erfindungsgemäßen Wirkstoffe können in den Formulierungen auch in Mischungen mit anderen in der Veterinär- und/oder Humanmedizin zur Behandlung von Infektionen und/oder Erkrankungen benutzten bekannten Wirkstoffen vorliegen, insbesondere L-2,3,5,6-Tetrahydro-6-phenylimidazothiazol, Benzimidazolcarbamaten, Praziquantel, Febantel.

Die Wirkstoffe können in üblicher Weise angewendet werden. Die Applikation erfolgt vorzugsweise oral, eine parenterale, insbesondere subkutane, aber auch eine dermale Applikationen (pour-on, spot-on) sind möglich.

Im allgemeinen hat es sich als vorteilhaft erwiesen, Mengen von etwa 1 bis etwa 100 mg der Wirkstoffe je kg Körpergewicht pro Tag zur Erzielung wirksamer Ergebnisse zu verabreichen.

Trotzdem kann es gegebenenfalls erforderlich sein, von den genannten Mengen abzuweichen, und zwar in Abhängigkeit vom Körpergewicht des Versuchstieres bzw. der Art des Applikationsweges, aber auch aufgrund der Tierart und deren individuellem Verhalten gegenüber dem Medikament bzw. der Art von dessen Formulierung und dem Zeitpunkt bzw. Intervall, zu welchem die Verabreichung erfolgt. So kann es in einigen Fällen ausreichend sein, mit weniger als der vorgenannten Mindestmenge auszukommen, während in anderen Fällen die genannte obere Grenze überschritten werden muß. Im Fall der Applikation größerer Mengen kann es empfehlenswert sein, diese in mehrere Einzelgaben über den Tag zu verteilen. Für die Applikation in der Veterinärmedizin ist der gleiche Dosierungsspielraum vorgesehen. Sinngemäß gelten auch die weiteren obigen Ausführungen.

Beispiel A

In vitro Nematodentest

Caenorhabditis elegans

Der Wirkstoff wird in Wasser oder Dimethylsulfoxid (DMSO) gelöst und mit Wasser auf die gewünschte Konzentration verdünnt. 0,01 ml dieser Lösung wurde auf eine Replica-Platte gegeben. Dazu wurden 2 ml einer E.coli-Suspension gegeben, zu der man 10-20 weibliche Tiere oder Larven von Caenorhabditis elegans in 0,5 ml sterile M9 Pufferlösung gegeben hat. Die E.coli-Suspension wurde hergestellt indem man 300 ml einer Übernachtkultur eines Uracil-bedürftigen E.coli-Stammes mit 1,8 l steriler M9 Pufferlösung versetzte.

Der Versuchsansatz wurde 7 Tage bei 22°C inkubiert und danach ausgewertet. Es wurde bewertet inwieweit der Wirkstoff die Vermehrung beeinträchtigt und die Konzentration in µg pro ml angegeben bei der die Vermehrung zu 95% verhindert wird (effektive Dosis). Dabei wurden folgende Ergebnisse erhalten:

0240716

| Wirkstoff<br>Beispiel Nr. | effektive Dosis<br>µg/ml |
|---|---|
| 1 | 100 |
| 3 | 100 |
| 4 | 100 |
| 5 | 100 |
| 6 | 100 |
| 7 | 100 |
| 8 | 100 |
| 10 | 100 |
| 11 | 100 |
| 12 | 100 |
| 13 | 100 |
| 14 | 100 |
| 15 | 100 |
| 16 | 100 |
| 17 | 100 |
| 18 | 100 |
| 19 | 100 |
| 20 | 100 |

0240716

Beispiel B

Haemonchus contortus / Schaf

Experimentell mit Haemonchus contortus infizierte Schafe wurden nach Ablauf der Präpatenzzeit des Parasiten behandelt. Die Wirkstoffe wurden als reiner Wirkstoff in Gelatinekapseln oral appliziert.

Der Wirkungsgrad wird dadurch bestimmt, daß man die mit dem Kot ausgeschiedenen Wurmeier vor und nach der Behandlung quantitativ auszählt.

Ein völliges Sistieren der Eiausscheidung nach der Behandlung bedeutet, daß die Würmer abgetrieben wurden oder so geschädigt sind, daß sie keine Eier mehr produzieren (Dosis effectiva).

Geprüfte Wirkstoffe und wirksame Dosierungen sind aus der nachfolgenden Tabelle ersichtlich:

Tabelle b)

Haemonchus contortus / Schaf

| Wirkstoff Beispiel Nr. | effektive Dosis in mg/kg |
|---|---|
| 5 | 100 |

0240716

Beispiel C

In vivo Nematodentest

Strongyloides ratti

Experimentell mit Strongyloides ratti infizierte Ratten werden 7 Tage nach der Infektion an drei aufeinanderfolgenden Tagen oral mittels Schlundsonde behandelt. Die Tiere werden 13 Tage nach der Infektion getötet und die Zahl der Parasiten bestimmt. Es wird die Wirkstoffkonzentration angegeben, bei der mindestens 95 % der Parasiten abgetötet wurden (effektive Dosis):

| Wirkstoff Beispiel Nr. | effektive Dosis mg/kg |
|---|---|
| 7 | 100 |
| 12 | 100 |

Beispiel D

Phaedon-Larven-Test

Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Meerrettichblattkäfer-Larven (Phaedon cochleariae) besetzt, solange die Blätter noch feucht sind.

Nach der gewünschten Zeit wird die Abtötung in % bestimmt. Dabei bedeutet 100 %, daß alle Käferlarven abgetötet wurden; 0 % bedeutet, daß keine Käfer-Larven abgetötet wurden.

Die Verbindungen der folgenden Herstellungsbeispiele zeigen bei einer Konzentration von 0,01 % 100 % Wirksamkeit: 5, 7, 12, 13, 14, 17, 16, 15, 20, 19.

Beispiel E

Plutella-Test

Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Raupen der Kohlschabe (Plutella maculipennis) besetzt, solange die Blätter noch feucht sind.

Nach der gewünschten Zeit wird die Abtötung in % bestimmt. Dabei bedeutet 100 %, daß alle Raupen abgetötet wurden; 0 % bedeutet, daß keine Raupen abgetötet wurden.

Die Verbindungen der folgenden Herstellungsbeispiele zeigen bei einer Konzentration von 0,1 % 100 % Wirksamkjeit: 4, 5, 11, 17, 16, 15, 20, 19.

Beispiel F

Aedes-Test

Lösungsmittel: 3 Gewichtsteile Aceton
Emulgator: 1 Gewichtseil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschten Konzntrationen.

Man füllt die wäßrigen Wirkstoffzubereitungen in Gläser und setzt anschließend 20 Mückenlarven ($L_4$) (Aedes aegypti) in jedes Glas ein.

Nach der gewünschten Zeit wird die Abtötung in % bestimmt. Dabei bedeutet 100 %, daß alle Tiere abgetötet wurden; 0 % bedeutet, daß keine Tiere abgetötet wurden.

Bei diesem Test zeigen die Verbindungen der folgenden Herstellungsbeispiele in einer Konzentration von 0,001 % eine 100 %ige Wirkung: 17, 16, 15, 20, 19.

## Beispiele

a) Allgemeine Vorschrift zur Herstellung der Verbindungen der Formel I gemäß Verfahren 2a.

Je 0,03 Mol der Verbindung II und des Isocyanats (III) werden in 120 ml trockenem THF vorgelegt und bei Raumtemperatur innerhalb von 10 Minuten mit einer Lösung von 0,033 Mol "DBU" in 30 ml THF versetzt. Dabei tritt eine leichte Wärmeentwicklung auf. Anschließend wird bis zum vollständigen Umsatz (ca. 4 - 5 h) am Rückfluß nachgerührt, abgekühlt und der gesamte Ansatz in 400 ml 10 %ige Salzsäure eingerührt. Der dabei sich abscheidende Feststoff wird abgesaugt, mit Wasser gewaschen und getrocknet.

b) Allgemeine Vorschrift zur Herstellung der Verbindungen der Formel I gemäß Verfahren 2b.

0,05 Mol der Verbindung II und 0,05 Mol "DBU" werden in 100 ml Toluol vorgelegt und bei Raumtemperatur 0,05 Mol eines Säurechlorids (Verbindung IV) in 10 min zugetropft. Dann wird 2 h bei Raumtemperatur bis zum vollständigen Umsatz nachgerührt und der gesamte Ansatz in 300 ml 10%ige Salzsäure eingerührt. Die organische Phase wird über $Na_2SO_4$ getrocknet und eingeengt. Je nach Acylierungsreagenz enthält die gewünschte Verbindung I unterschiedliche Mengen an O-acylierter Verbindung V, die chromatographisch abgetrennt werden kann. Das Gemisch an C- und O-acylierter Verbindung kann auch direkt nach Verfahren C in die gewünschte Verbindung I übergeführt werden.

c) Allgemeine Vorschrift zur Herstellung der Verbindungen der Formel I gemäß Verfahren 2c.

0,05 Mol der Verbindung V bzw. Va oder 0,05 Mol eines nach Verfahren b erhaltenen Gemisches aus C- und O-acylierter Verbindung (I und V bzw. Va) in 100 ml Toluol wird bei Raumtemperatur mit 0,5 g 4-N,N-Dimethylaminopyridin versetzt und unter Rühren 5 h am Rückfluß gekocht. Dann wird abgekühlt, mit 300 ml 10%iger Salzsäure verrührt, die organische Phase abgetrennt und über Natriumsulfat getrocknet. Nach Abdestillieren des Lösungsmittels im Vakuum wird der Rückstand chromatographiert oder umkristallisiert.

d) Allgemeine Vorschrift zur Herstellung der Verbindungen der Formel I gemäß Verfahren 2d.

0,03 Mol der Verbindung VI und 0,03 Mol des Amins VII werden in 100 ml Toluol suspendiert und unter Stickstoff ca. 10 Stunden auf Rückflußtemperatur erhitzt, wobei Ethanol entweicht. Das Reaktionsgemisch wird abgekühlt und der Feststoff abfiltriert. Das abfiltrierte Produkt wird mit Ethanol nachgewaschen und anschließend getrocknet.

e) Allgemeine Vorschrift zur Herstellung der Verbindungen der Formel II gemäß Verfahren 4.

Zu 0,1 Mol der Verbindung VIII in 100 ml trockenem Methylenchlorid werden bei $5^0C$ unter

Außenkühlung 0,11 Mol Malonsäuredichlorid in ca. 30 Minuten getropft. Dann wird 2-4 Stunden bei 40°C nachgerührt, abgekühlt und der Reaktionsansatz filtriert. Das Filtrat wird im Vakuum durch Abdestillieren der Lösungsmittel zur Trockne eingeengt und der Rückstand aus Ethanol/Petrolether umkristallisiert.

Gemäß einem der oben angegebenen Verfahren a) - d) werden die Verbindungen der folgenden Tabelle erhalten:

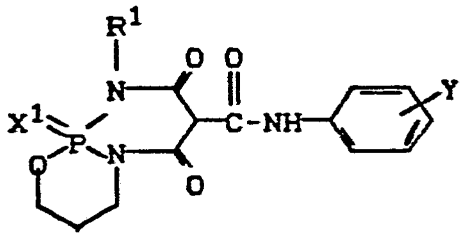

| Bsp. Nr. | $X_1$ | $R^1$ | Y | Fp °C |
|---|---|---|---|---|
| 1 | S | $iC_3H_7$ | $4-SCF_3$ | 131-132° C |
| 2 | " | " | 4- 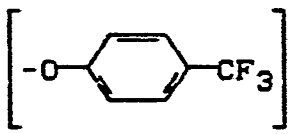 | 52-55° |
| 3 | " | $-CH_2-C_6H_5$ | $4-SCF_3$ | 105-110° |
| 4 | O | $-C_6H_5$ | $4-SCF_3$ | 164-166° C |
| 5 | " | " | $4-OCF_3$ | 130-134° C |
| 6 | " | $4(-OCH_3)C_6H_4$ | " | 217° C |
| 7 | " | " | $4-CF_3$ | 163° |
| 8 | " | " | " | amorph |
| 9 | " | " | 4 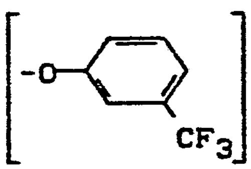 | 114-116° C |
| 10 | " | " | $3-Cl,4-CF_3$ | amorph |
| 11 | " | $C_6H_5$ | $4-CF_3$ | 148-152° |

| Bsp. Nr. | $X_1$ | $R^1$ | Y | Fp °C |
|---|---|---|---|---|
| 12 | " | $C_6H_5$ | 4 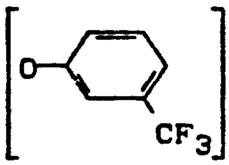 | amorph |
| 13 | " | " | 3-Cl,4-$CF_3$ | 156-159° C |
| 14 | " | " | 3-$CF_3$, 4-Cl | 155-158° |
| 15 | " | $CH_3$ | 4-$OCF_3$ | Oel |
| 16 | " | " | 4-$SCF_3$ | 116-117° |
| 17 | " | " | 4-$CF_3$ | 129-131° |
| 18 | " | " | 4-Cl | 132-134° |
| 19 | " | " | 3-Cl,4-$OCF_3$ | 114-117° |
| 20 | " | " | 3-Cl,4-$CF_3$ | 112-115° |

Nach dem oben angegebenen Verfahren 2e werden die Verbindungen der folgenden Tabelle erhalten:

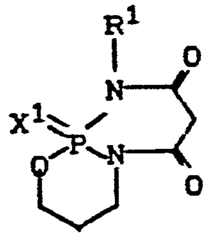

| Bsp. Nr. | $X^1$ | $R^2$ | Fp/°C |
|---|---|---|---|
| 21 | S | $-iC_3H_7$ | 127-128 |
| 22 | S | $-CH_2C_6H_5$ | 86-86,5° C |
| 23 | O | $-C_6H_5$ | 220° C(Z) |
| 24 | O | $4-C_6H_4OCH_3$ | 216-217° C(Z) |
| 25 | O | $CH_3$ | 132-5° C |

Patentansprüche

1. Bicyclische Diazaphosphorverbindungen der Formel I

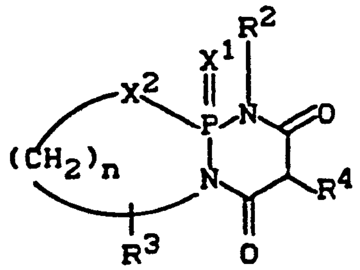

I

in welcher

n für 2, 3, 4, 5 steht

$X^1$ für O oder S steht

$X^2$ für O, S oder $\rangle NR^1$

$R^1$ und $R^2$ unabhängig voneinander für Wasserstoff, Alkyl, Aryl oder Aralkyl stehen,

$R^3$ für Wasserstoff oder einen oder mehrere gleiche oder verschiedene Substituenten steht,

$R^4$ für Acylreste steht.

Die Verbindungen der Formel I können in Form ihrer

verschiedenen Tautomeren (Keto/Enol) sowie als Gemische dieser Tautomeren, sowie in Form ihrer Salze mit Basen vorliegen. Formel I umfaßt auch alle möglichen Enantiomeren und Diastereomeren sowie deren Gemische.

2. Verfahren zur Herstellung der bicyclischen Diazaphosphorverbindungen der Formel I

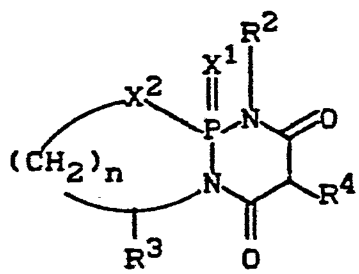

I

in welcher

n für 2, 3, 4, 5 steht

$X^1$ für O oder S steht

$X^2$ für O, S oder $>N-R^1$ steht,

$R^1$ und $R^2$ unabhängig voneinander für Wasserstoff, Alkyl, Aryl oder Aralkyl stehen,

$R^3$ für Wasserstoff oder einen oder mehrere gleiche oder verschiedene Substituenten steht,

$R^4$ für Acylreste steht,

dadurch gekennzeichnet, daß man

bicyclische Diazaphosphorverbindungen der Formel II

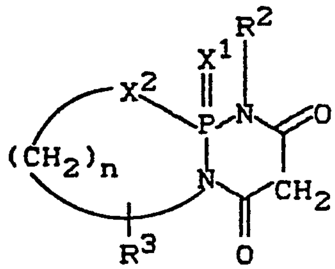

II

in welcher

n, $X^1$, $X^2$, $R^2$, $R^3$ die oben angegebene Bedeutung haben,

a) mit Isocyanaten der Formel III

$$R^5 - NCO(S) \qquad III$$

in welcher

$R^5$ für gegebenenfalls substituiertes Alkyl, Aryl oder Acyl steht,

gegebenenfalls in Gegenwart von Katalysatoren umsetzt, oder

b) mit Verbindungen der Formel IV

$$R^6 - X^3 \qquad IV$$

in welcher

$X^3$ für die Reste -CO(S)Hal, -CO-O-CO-$R^6$,

$R^6$ für gegebenenfalls substituiertes Alkyl, Aryl oder die Reste -O-$R^7$, -$NR^8R^9$ steht,

$R^7$ für Alkyl oder Aryl steht,

$R^8$ für Wasserstoff, gegebenenfalls substituiertes Alkyl, Aryl oder Acyl steht,

$R^9$ für Wasserstoff, gegebenenfalls substituiertes Alkyl oder Aryl steht,

$R^8$ und $R^9$ gemeinsam mit dem angrenzenden Stickstoffatom für einen gegebenenfalls weitere Heteroatome enthaltenden gesättigten Heterocyclus stehen, der gegebenenfalls substituiert sein kann

in Gegenwart von Säurebindemitteln umsetzt, oder

c) Verbindungen der Formeln V und Va

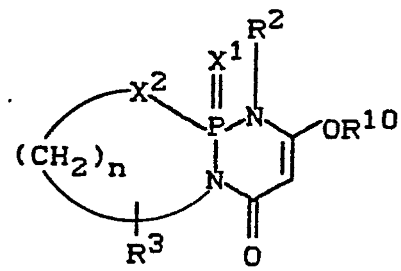

V

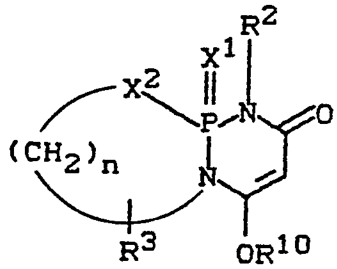

Va

in welchen

n, $X^1$, $X^2$, $R^2$, $R^3$ die oben angegebenen Bedeutung haben

$R^{10}$ für den Rest $-CO(S)R^6$ steht, wobei

$R^6$ die oben angegebene Bedeutung hat,

in Gegenwart von starken Basen umlagert oder

d) Verbindungen der Formel VI

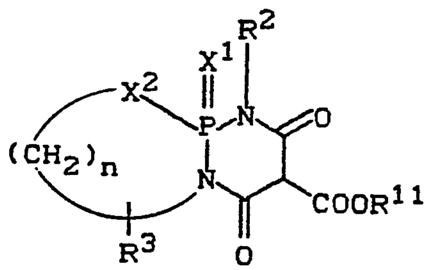

VI

in welcher

n, $X^1$, $R^1$, $R^2$ und $R^3$ die oben angegebene Bedeutu besitzen und

$R^{11}$ für $C_{1-4}$-Alkyl, Phenyl, das gegebenenfalls durch $NO_2$ substituiert ist, steht

mit Aminen der Formel VII

$$HNR^8R^9 \qquad VII$$

in welcher

$R^8$ und $R^9$ die oben angegebene Bedeutung besitzen,

umsetzt.

3. Verbindungen der Formel II

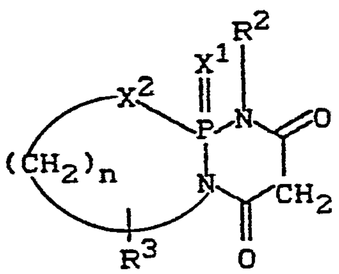

II

in welcher

n, $X^1$, $X^2$, $R^2$, $R^3$ die die in Anspruch 2 angegebene Bedeutung, besitzen.

4. Verfahren zur Herstellung der Verbindungen der Formel II

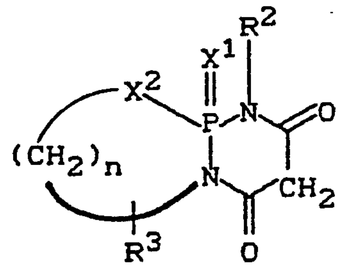

II

in welcher

n, $X^1$, $X^2$, $R^2$, $R^3$ die in Anspruch 2 angegebene Bedeutung besitzen,

dadurch gekennzeichnet, daß man Verbindungen der Formel VIII

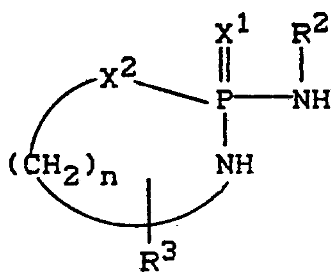

VIII

in welcher
n, $X^1$, $X^2$, $R^1$, $R^2$, $R^3$ die obenangegebene Bedeutung be

mit Verbindungen der Formel IX

$$CH_2(COR^{12})_2 \qquad IX$$

in welcher

$R^{12}$ für Halogen, OH, $C_{1-4}$-Alkoxy, Phenoxy steht

umsetzt.

5. Verbindungen der Formeln V bzw. Va

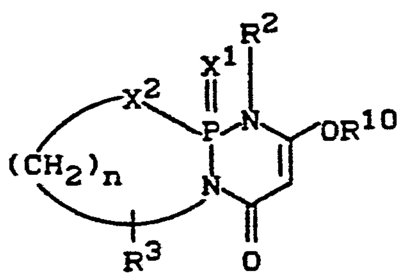
V

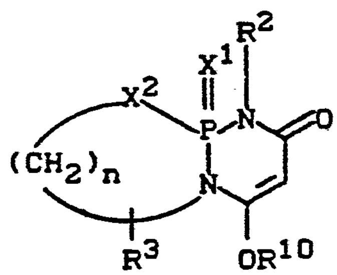
Va

in welcher

n, $X^1$, $X^2$, $R^1$, $R^2$, $R^3$ die obenangegebene Bedeutung besitzen.

6. Verfahren zur Herstellung der Verbindungen der Formeln V bzw. Va

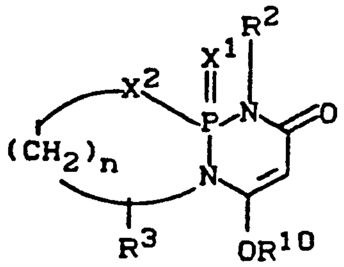 Va

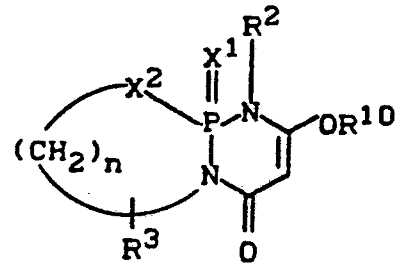 V

in welcher

n, $X^1$, $X^2$, $R^2$, $R^3$, $R^{10}$ die in Anspruch 2 angegebene Bedeutung haben,

dadurch gekennzeichnet, daß man Verbindungen der Formel II

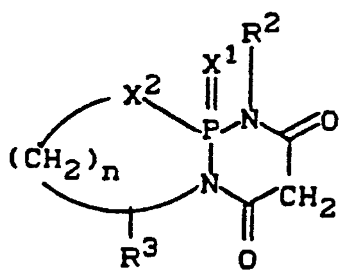 II

in welcher

n, $X^1$, $X^2$, $R^2$, $R^3$ die in Anspruch 2 angegebene Bedeutung besitzen

mit Verbindungen der Formel IV

$$R^6\text{-}X^3 \qquad \text{IV}$$

in welcher

$R^6$ und $X^3$ die in Anspruch 2 (Punkt 2b) angegebene Bedeutung besitzen,

umsetzt.

7. Schädlingsbekämpfungsmittel, gekennzeichnet durch einen Gehalt an mindestens einer bicyclischen Diazaphosphorverbindung der Formel (I), gemäß Anspruch 1.

8. Verwendung von bicycliscen Diazaphosphorverbindungen der Formel (I) gemäß Anspruch 1 zur Bekämpfung von Schädlingen.

9. Verfahren zur Bekämpfung von Schädlingen, dadurch gekennzeichnet, daß man bicyclische Diazaphosphorverbindungen der Formel (I) gemäß Anspruch 1 auf Schädlinge und/oder ihren Lebensraum einwirken läßt.

10. Verfahren zur Herstellung von Schädlingsbekämpfungsmitteln, dadurch gekennzeichnet, daß man bicyclische Diazaphosphorverbindungen der Formel (I) gemäß Anspruch 1 mit Streckmitteln und/oder oberflächenaktiven Mitteln vermischt.

11. Verwendung von bicyclischen Diazaphosphorverbindungen der Formel (I) gemäß Anspruch 1 zur Herstellung von Schädlingsbekämpfungsmitteln.